# FASCICULE DE BREVET EUROPEEN

(11) **EP 2 259 999 B1**
(45) Date de publication et mention de la délivrance du brevet: **27.06.2018**
(21) Numéro de dépôt: 09720317.8
(22) Date de dépôt: 20.02.2009
(51) Int. Cl.: C07F 7/08

(54) **MATÉRIAUX POUR L'EXTRACTION SOLIDE/LIQUIDE DE CATIONS DE MÉTAUX LOURDS À BASE DE POLYAZACYCLOALCANES N-FONCTIONNALISÉS SUPPORTÉS**
MATERIALIEN FÜR DIE FEST-/FLÜSSIGEXTRAKTION VON SCHWERMETALLIONEN MIT GETRÄGERTEN N-FUNKTIONALISIERTEN POLYAZACYCLOALKANEN
MATERIALS FOR THE SOLID/LIQUID EXTRACTION OF HEAVY METAL IONS, CONTAINING SUPPORTED N-FUNCTIONALISED POLYAZACYCLOALKANES

(30) Priorité: 28.02.2008 FR 0851306
(43) Date de publication de la demande: 15.12.2010
(73) Titulaire: Centre National de la Recherche Scientifique (C.N.R.S.), 75016 Paris (FR)
(72) Inventeur: MEYER, Michel, F-21000 Dijon (FR); BUCAILLE, Arnaud, F-92700 Colombes (FR); CUENOT, François, F-92130 Issy Les Moulineaux (FR); DENAT, Franck, F-21000 Dijon (FR); BOSCHETTI, Frédéric, F-21800 Chevigny Saint Sauveur (FR); GUILARD, Roger, F-21121 Fontaine-les-dijon (FR)
(74) Mandataire: Lavoix
(86) Numéro de dépôt international: PCT/FR2009/050271
(87) Numéro de publication internationale: WO 2009/112736

(56) Documents cités:
- EP-B- 1 218 104
- WO-A-01/46202
- WO-A-03/029228
- US-B1- 6 174 505
- US-B1- 6 524 372
- Robert J. P. Corriu ET AL: "Coordination Chemistry in the Solid: Evidence for Coordination Modes within Hybrid Materials Different from those in Solution", Chemistry - A European Journal, vol. 8, no. 24, 16 December 2002 (2002-12-16), pages 5732-5741, XP055029812, ISSN: 0947-6539, DOI: 10.1002/1521-3765(20021216)8:24<5732::AID- CHEM5732>3.0.CO;2-H
- STÉPHANE BRANDÈS: "De la molécule au procédé : apports des matériaux hybrides organiques-inorganiques en chimie séparative", L'ACTUALITÉ CHIMIQUE, vol. octobre-novembre, no. 290-291, 1 November 2005 (2005-11-01), - 2005, pages 108-117,

## Description

La présente invention a trait au domaine de l'extraction solide/liquide de cations métalliques, et notamment de cations de métaux lourds (en particulier de cations plomb, cadmium, cuivre ou nickel) présents dans des milieux liquides. L'invention concerne plus précisément des matériaux solides désignés ci-après par le terme générique de *"matériaux extractants*", qui permettent le piégeage de cations métalliques en milieu liquide et leur extraction hors d'un tel milieu liquide, et qui se révèlent entre autres particulièrement bien adaptés à l'extraction de cations Pb²⁺ hors de milieux aqueux. L'invention concerne également des procédés de synthèse de tels matériaux extractants.

L'extraction solide/liquide de cations de métaux lourds hors de milieux liquides, notamment hors de milieux aqueux, est une technique bien connue, à laquelle il est souvent fait recours industriellement. En règle générale, une telle extraction solide/liquide est conduite en mettant en contact le milieu liquide à traiter, contaminé par des cations de métaux lourds, avec un solide capable de complexer ces cations de métaux lourds, ce par quoi une partie au moins des cations de métaux lourds présents dans le milieu liquide se retrouvent piégés par le solide, induisant ainsi une purification du milieu liquide. Les techniques d'extraction de ce type trouvent de nombreuses applications pratiques, parmi lesquelles on peut notamment citer le traitement d'une eau potable avant sa consommation, ou bien encore le traitement d'eaux usées ou d'effluents industriels (aqueux notamment) avant leur rejet dans l'environnement.

De nombreuses techniques d'extraction du type précité ont été développées et sont utilisées de longue date. Dans ce cadre, il a notamment été décrit l'emploi de résines échangeuses d'ions capables de fixer certains cations métalliques, comme par exemple la résine chélatante Amberlyst IRC718® commercialisée par la société Rhom & Haas qui comporte des groupes iminidoacétate lui conférant une bonne affinité pour les cations cuivre et fer, ou bien la résine GT73® à base d'une matrice polystyrénique modifiée par des terminaisons soufrées qui est, elle, adaptée au piégeage du cuivre, de l'argent, du cadmium et du plomb.

Plus généralement, il a été envisagé l'emploi de polymères fonctionnalisés, du type par exemple des billes de polymères porteuses de groupements dithiocarbamates décrites dans Polyhedron, vol. 15, pp. 4241-4254 (1996) ou des matériaux de piégeage à base de polymères porteurs de terminaisons acrylique du type de ceux divulgués dans Energy Fuels, vol. 12, pp. 792-797 (1998). Il est également connu que certains matériaux naturels comme la lignine ou le chitosan ont la propriété de fixer certains métaux lourds, cette capacité pouvant être encore améliorée par le greffage de groupements séquestrants sur ce type de matériaux. A ce sujet, on pourra notamment se reporter à Water Res., vol. 33, pp. 2469-2479 (1999) ou à Bull. Chem. Soc. Jpn, vol. 70, pp. 2446-2447 (1997).

Il a par ailleurs été proposé des matériaux extractants à base d'un support inorganique, parmi lesquels on peut citer les adsorbants de cations à base de ligands immobilisés sur des gels de silice ou des silices mésoporeuses, du type de ceux décrits par exemple dans Chem. Commun, pp. 258-259 (2000), J. Chem. Soc, Dalton Trans., pp. 2206-2209 (2001), Science, vol. 276, pp. 923-926 (1997) ou Adv. Mater. , vol.9, pp. 550-503 (1997).

De façon plus générale, il a été décrit un grand nombre de méthodes reposant sur la modification de surface de supports organiques ou minéraux par des groupements coordinants, complexants ou séquestrants des cations métalliques dont l'extraction est recherchée. Au sens de la présente description, de tels groupements coordinants, complexants ou séquestrants seront désignés par le terme générique de "groupe coordinant".

Notamment compte tenu des exigences réglementaires de plus en plus draconiennes en termes de santé publique et de rejets dans l'environnement, il existe aujourd'hui un besoin réel de méthodes d'extraction solide/liquide permettant une élimination particulièrement efficace et sélective de cations métalliques de types cations de métaux lourds au sein de milieux liquides. De telles méthodes sont tout particulièrement requises dans le domaine du traitement des eaux potables destinées à la consommation humaine, où les exigences en matière de teneurs résiduelles en métaux lourds, et notamment en plomb, sont de plus en plus strictes.

A titre indicatif, la norme en vigueur en France à l'heure actuelle (fixée par le décret n°2001-1220 du 20 décembre 2001 appliquant la directive européenne 98/83/CE du 3 novembre 1998) fixe à 25 microgrammes par litre (soit 25 ppb) la teneur maximale en plomb admissible dans une eau potable, et ce seuil sera de 10 microgrammes par litre (10 ppb) à compter du 25 décembre 2013. En matière de traitement des eaux destinées à la consommation, il existe donc un besoin de méthodes d'extraction du plomb et d'éventuels autres métaux lourds jusqu'à obtention de teneurs aussi faibles que quelques ppb, et ce de préférence sans extraire dans le même temps d'autres espèces utiles présentes dans l'eau potable, comme par exemple les cations alcalins ou alcalino-terreux. Des procédés de ce type, permettant une extraction efficace de métaux lourds sont également d'intérêt pour le traitement d'eaux usées ou d'effluents aqueux industriels, dans la mesure où les teneurs résiduelles en métaux lourds acceptables pour des effluents rejetés dans l'environnement tendent elles aussi à devenir de plus en plus faibles.

Une méthode développée dans ce sens a été décrite notamment dans la demande internationale WO 01/46202, qui concerne des matériaux extractants destinés notamment à l'extraction d'ions Pb²⁺ en milieu aqueux, qui comprennent un support de type gel de silice, greffé par des polyazacycloalcanes N-fonctionnalisés. L'emploi de ces polyazacycloalcanes N-fonctionnalisés supportés permet certes d'atteindre des seuils d'épuration supérieurs à ceux obtenus par l'utilisation de résines échangeuses d'ions commerciales, mais les matériaux divulgués dans cette demande se révèlent toutefois insuffisants, dans le cas le plus général, pour obtenir un niveau de purification poussé du type requis dans le traitement de l'eau potable.

Un but de la présente invention est de fournir de nouveaux matériaux solides extractants adaptés à l'extraction solide/liquide de cations métalliques en milieu liquide permettant notamment une élimination des cations Pb²⁺ plus efficace que celle obtenue avec les matériaux divulgués dans la demande WO 01/46202 précitée. Plus généralement, l'invention se fixe pour objectif de fournir un extractant solide permettant une extraction des ions plomb et de préférence d'autres métaux lourds hors d'un milieu liquide (et tout particulièrement hors d'un milieu aqueux) avec une efficacité suffisante pour satisfaire aux exigences requises dans le domaine de la purification des eaux potables et du traitement des effluents industriels et eaux usées avant leur rejet dans l'environnement.

L'invention est définie dans et par les revendications annexées.

Pour atteindre ces objectifs, selon un premier aspect, la présente invention fournit un matériau adapté à l'extraction de cations métalliques. Ce matériau comprend un support solide (désigné ci-après par S) sur lequel sont fixés de façon covalente des composés polyazacycloalcanes (désignés ci-après par PAC) ayant un cycle comportant 4 atomes d'azote, et où chacun des atomes d'azote du cycle est substitué par un groupe coordinant, chacun des groupes coordinants portés par les atomes d'azote du cycle d'un (PAC) fixé au support (S) étant indépendamment des autres :
- soit un groupe coordinant, désigné ci-après par groupe Rc, répondant à la formule générale suivante :

   -(CH₂)ₙ-C(=O)-NR¹R²

   où :
   n = 1, 2 ou 3 ;
   R¹ et R² sont identiques ou différents et chacun d'entre eux représente un atome d'hydrogène, ou un radical alkyle comprenant de 1 à 4 atomes de carbone, ou un radical alcényle comprenant de 1 à 4 atomes de carbone, ou un radical aryle ;
- soit un groupe coordinant et liant, désigné ci-après par groupe RcL, répondant à la formule générale suivante :

   -(CH₂)ₚ-C(=O)-NR³-(A)-[support],

   où :
   p = 1, 2 ou 3 ;
   R³ représente un atome d'hydrogène ou un radical alkyle comprenant de 1 à 4 atomes de carbone, ou un radical alcényle comprenant de 1 à 4 atomes de carbone, ou un radical aryle (de préférence un atome d'hydrogène ou un radical alkyle comprenant de 1 à 4 atomes de carbone) ;
   -(A)- représente une chaîne hydrocarbonée, linéaire ou ramifiée, saturée ou insaturée, éventuellement cyclisée en tout ou partie et éventuellement interrompue par un ou plusieurs hétéroatomes, liée par au moins une liaison covalente au support solide (S), ledit matériau répondant à l'une des formules indiquées dans la revendication 1.

Ainsi, un matériau extractant selon l'invention est un matériau à base d'un support solide (S) modifié par greffage covalent de composés polyazacycloalcanes (PAC) comportant 4 atomes d'azote chacun de ces composés (PAC) étant spécifiquement substitué par un groupe coordinant (Rc ou RcL) tel que défini ci-dessus sur chacun des atomes d'azote de son cycle.

La nature exacte du support solide (S) sur lequel sont liés les composés polyazacycloalcanes (PAC) peut varier en une assez large mesure, sous réserve qu'elle permette le greffage covalent des composés (PAC) sur sa surface requis selon l'invention. Selon un mode de réalisation généralement intéressant, bien que non systématique, on peut typiquement employer à titre de support solide (S) un support solide comprenant un oxyde minéral, généralement au moins au niveau de sa surface.

Selon un mode de réalisation qui se révèle particulièrement intéressant, le support solide (S) employé selon l'invention comprend un gel de silice. Selon un mode spécifique généralement bien adapté à la mise en oeuvre de l'invention, le support (S) employé est constitué par un tel gel de silice. Des gels de silice utiles à titre de support (S) selon la présente invention sont notamment les gels de silice amorphes de type Kieselgel ou les gels de silice mésostructurés de type MTS décrits notamment dans J. Chem. Soc, Dalton Trans., pp. 1209-1214 (1996) et Chem. Mater., vol.13, pp. 3151-3168 (2001).

Au sens de la présente description, l'expression "*composé polyazacycloalcane*" désigne un composé organique incluant un cycle polyazacycloalcane, à savoir un cycle saturé de type cycloalcane où plusieurs des groupements (CH₂) sont remplacés par des fonctions amines secondaires ou tertiaires (en d'autres termes, un cycle polyazacycloalcane est une chaîne cycloalcane interrompue par plusieurs atomes d'azote).

Les composés polyazacycloalcanes employés dans le cadre de la présente invention ont systématiquement un cycle comprenant 4 atomes d'azote.

Selon la présente invention, les composés polyazacycloalcanes (PAC) présents sur le matériau extractant de la présente invention sont des composés tétraazacycloalcanes, à savoir des composés porteurs d'un cycle comportant exactement 4 atomes d'azote, ce cycle étant de préférence :
- un cycle 1,4,8,11-tétraazacyclotétradécane à 14 chaînons, répondant à la formule suivante : 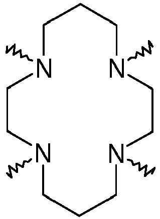
ou bien
- un cycle 1,4,7,10-tétraazacyclotridécane à 13 chaînons, ayant la formule ci-dessous :

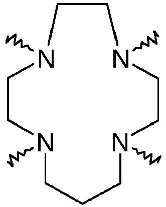

Quelle que soit sa nature exacte, le cycle polyazacycloalcane des composés polyazacycloalcanes (PAC) présents sur un matériau extractant selon l'invention est systématiquement fonctionnalisé par un groupe Rc ou RcL du type précité sur chacun des atomes d'azote de son cycle. Chacun de ces groupes Rc et RcL, qui présente la capacité de pouvoir complexer des cations métalliques, est désigné ici par le terme générique de "groupe coordinant". La présence d'un tel groupement de nature coordinante au niveau de chacun des atomes d'azote du cycle des composés polyazacycloalcanes (PAC) constitue une spécificité des matériaux de l'invention qui est rendue possible par le procédé de préparation spécifique mis au point à cet effet dans le cadre de la présente invention et qui est décrit plus loin dans la présente description.

Les travaux réalisés par les inventeurs dans le cadre de la présente invention ont maintenant permis de mettre en évidence que la présence systématique de groupes coordinants sur chacun des atomes d'azote du cycle polyazacycloalcane confère aux matériaux de l'invention une efficacité d'extraction très élevée de certains cations métalliques, et en particulier de cations de métaux lourds tels que Pb²⁺ , Cd²⁺ , Cu²⁺ , Zn²⁺ ou Ni²⁺. Les matériaux de l'invention se révèlent tout particulièrement bien adaptés pour isoler ou éliminer ces cations dans différents milieux liquides, et notamment dans des milieux aqueux, et ce aussi bien en mode statique qu'en mode dynamique.

En particulier, les matériaux de l'invention s'avèrent tout particulièrement adaptés au traitement de l'eau potable. Ils permettent notamment une élimination très efficace des cations Pb²⁺, qui se révèle adaptée pour atteindre assez aisément le niveau de purification requis dans le domaine de l'eau potable. Les travaux des inventeurs permettent plus précisément d'établir que les matériaux de l'invention sont à même d'assurer une décontamination extrêmement efficace d'un milieu aqueux contaminé par du plomb, en obtenant au final sans difficulté des teneurs résiduelles en plomb inférieures à 10 microgrammes par litre, et ce en présentant l'avantage de ne pas retenir dans le même temps les cations alcalins et alcalino-terreux. Un tel niveau de performance peut en outre être obtenu y compris en mode dynamique, ce qui ouvre la possibilité d'employer efficacement les matériaux extractants de l'invention dans des cartouches épuratoires pour eau potable simplement placées en amont ou en aval d'un robinet de distribution domestique d'eau potable. Ainsi, par exemple, les travaux des inventeurs ont notamment mis en évidence qu'un matériau extractant selon l'invention peut être employé efficacement pour réduire à une teneur résiduelle de l'ordre de 10 ppb ou moins la concentration en cation Pb²⁺ d'une eau potable véhiculée par un tuyau en plomb, et ce simplement par le biais d'une cartouche d'épuration adaptée placée en sortie du robinet de distribution d'eau (par exemple une cartouche du type décrit dans le brevet JP 02 301469).

Sans vouloir être liés à une théorie particulière, les travaux réalisés par les inventeurs permettent d'avancer que les excellentes capacités d'extraction obtenues dans le cadre de l'invention semblent tenir au fait que les composés polyazacycloalcanes immobilisés sur le support (S) ont une capacité de complexation de cations métalliques sensiblement similaire à celle qu'ils auraient s'ils se trouvaient à l'état libre au sein d'un milieu liquide. En fait, il semble que, compte tenu de la présence spécifique d'un groupement coordinant au niveau de chacun des atomes d'azote de leur cycle, les composés polyazacycloalcanes immobilisés sur le support (S) se comportent comme des "pinces moléculaires" capables de chélater efficacement des cations de taille adaptée, schématiquement de la même façon que les mêmes composés présents à l'état libre au sein d'un milieu liquide.

En d'autres termes, les matériaux extractants de l'invention peuvent, en quelque sorte, être décrits comme une forme immobilisée d'agents complexants de type polyazacycloalcanes n'ayant pas perdu leur efficacité complexante du fait de leur greffage covalent sur un support solide. Il est à noter que les matériaux de l'invention constituent en cela une avancée importante par rapport aux composés polyazacycloalcanes immobilisés sur support décrits dans la demande WO 01/46202 précitée, pour lesquels le greffage covalent passe systématiquement par l'immobilisation d'au moins un des azotes du cycle polyazacycloalcane, et qui se retrouvent donc dépourvus *in fine* d'au moins un groupement coordinant, réduisant en cela l'efficacité de la "pince moléculaire" assurée par les groupes coordinants susceptibles d'être portés par les azotes du groupe polyazacycloalcane.

Notamment de façon à obtenir une efficacité de complexation des cations métalliques la plus élevée possible pour un matériau selon l'invention, il s'avère le plus souvent préférable de choisir des composés polyazacycloalcanes où les groupes coordinants restent le plus possible libres d'assurer leur rôle de pince moléculaire propre à immobiliser un cation métallique. A cet effet, il est généralement préférable de limiter le nombre de groupes coordinants des composés polyazacycloalcanes qui se retrouvent immobilisés sur le support (S), qui, s'ils étaient en nombre trop important, seraient susceptibles de conduire à une rigidification du cycle potentiellement nuisible à l'efficacité de la complexation des cations.

Dans le cas le plus général, il se révèle notamment préférable que les groupes coordinants portés par les atomes d'azote du cycle des composés polyazacycloalcanes (PAC) comprennent le moins possible de groupes RcL (coordinants et liants) répondant à la formule -(CH₂)ₚ-C(=O)-NR³-(A)-[support] précitée. Selon un mode de réalisation particulièrement intéressant, les groupes coordinants portés par les atomes d'azote du cycle des composés polyazacycloalcanes (PAC) comprennent au plus un groupe coordinant et liant RcL de ce type.

Selon une première variante intéressante, un matériau extractant selon l'invention peut avantageusement comprendre des composés polyazacycloalcanes (PAC) immobilisés sur le support solide (S) sans aucun groupement coordinant lié au support, à savoir des composés polyazacycloalcanes porteurs uniquement de groupes coordinants Rc à l'exclusion de tout groupement RcL.

Selon cette première variante le matériau extractant comprend de préférence des composés polyazacycloalcanes (PAC) immobilisés sur le support solide (S) qui répondent à la formule (I) suivante : 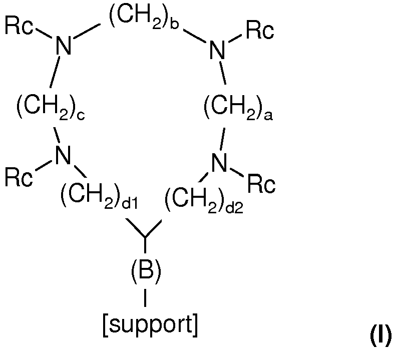 où :
a, b et c sont trois nombres entiers, identiques ou différents, chacun de a, b et c étant égal à 2 ou 3 ;
d1 et d2 sont deux nombres entiers identiques ou différents, égaux à 0, 1, ou 2, étant entendu que la somme (d1+d2) vaut 1 ou 2 ;
chacun des 4 groupes Rc, identiques ou différents (et le plus souvent identiques) représente un groupe répondant à la formule générale :

   -(CH₂)ₙ-C(=O)-NR¹R²
telle que définie plus haut ;
-(B)- est une chaîne hydrocarbonée, linéaire ou ramifiée, saturée ou insaturée, éventuellement cyclisée en tout ou partie, et éventuellement interrompue par un ou plusieurs hétéroatomes, liée par au moins une liaison covalente au support solide (S).

Selon cette première variante, il s'avère souvent avantageux que tous les composés polyazacycloalcanes (PAC) immobilisés sur le support solide (S) répondent à la formule (I) précitée.

Des composés polyazacycloalcanes particulièrement bien adaptés à la mise en oeuvre de la première variante sont des composés répondant à la formule (I) donnée ci-dessus. Par ailleurs, dans les composés de formule (I), il se révèle souvent intéressant que b = 3 et (d1+d2) = 2, et ce en particulier lorsque a = c = 2 (le cas où b = 2 et (d1+d2) = 2 et le cas où b = 3 et (d1+d2) = 1 sont également envisageables, en particulier lorsque a = c = 2, mais ils se révèlent souvent moins intéressants).

Un matériau extractant selon la première variante qui s'avère généralement particulièrement adapté à titre de matériau extractant comprend des composés polyazacycloalcanes (PAC) immobilisés sur le support solide (S) répondant à la formule (la) suivante (de préférence à l'exclusion de tout autre composé polyazacycloalcane) : 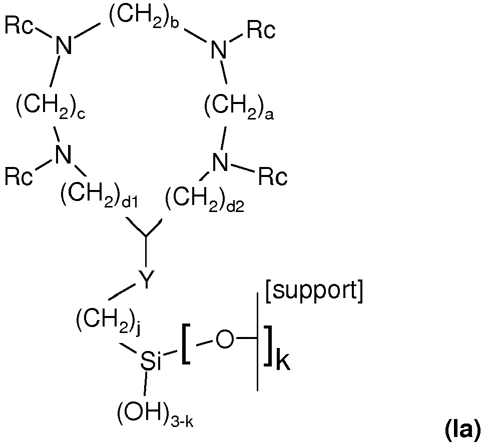 où :
a, b, c, d1, d2, ainsi que les groupements Rc ont les significations données ci-dessus pour la formule (I) ;
-Y- est un groupe hydrocarboné divalent, linéaire ou ramifié, saturé ou insaturé, éventuellement cyclisé en tout ou partie et éventuellement interrompu par un ou plusieurs hétéroatomes ;
j est un entier égal à 0, 1, 2 ou 3 ; et
k, qui représente le nombre de liaisons entre l'espèce cyclique et le support solide (S), est un entier égal à 1, 2 ou 3.

Selon un mode de réalisation de la première variante de l'invention, les composés polyazacycloalcanes (PAC) immobilisés sur le support solide (S) répondent à l'une des formules ci-dessous : 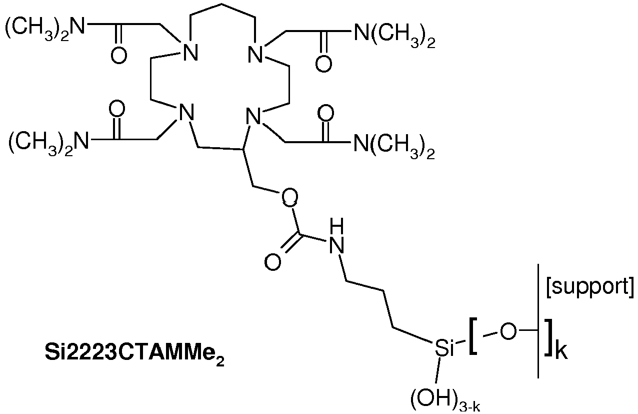 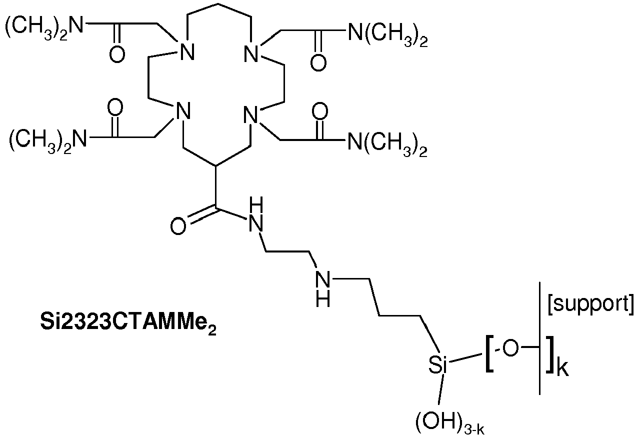 où k a la définition précitée.

Selon une deuxième variante intéressante, alternative à la variante définie ci-dessus, un matériau extractant selon l'invention peut comprendre des composés polyazacycloalcanes (PAC) immobilisés sur le support solide (S) par l'intermédiaire d'une liaison assurée par un groupement à la fois coordinant et liant RcL du type précité. Dans ce cas de figure particulier, il est souvent préférable que chacun des composés polyazacycloalcanes ainsi immobilisés ne comprenne qu'un unique groupement RcL et que l'ensemble des autres groupements coordinants soient des groupes coordinants Rc non liants.

Selon cette deuxième variante de l'invention, le matériau extractant de l'invention comprend de préférence des composés polyazacycloalcanes (PAC) immobilisés sur le support solide (S) qui répondent à la formule (II) suivante : 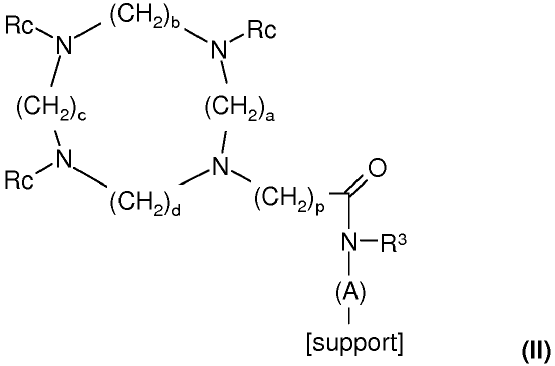 où :
a, b, c et d sont trois nombres entiers, identiques ou différents, chacun de a, b, c et d étant égal à 2 ou 3 ;
chacun des 3 groupes Rc, identiques ou différents (et le plus souvent identiques) représente un groupe répondant à la formule générale :

   -(CH₂)ₙ-C(=O)-NR¹R²
ayant la définition précitée ; et
p, R³ et -(A)- ont les définitions précitées.

Il se révèle souvent avantageux, dans le cadre de cette deuxième variante, que tous les composés polyazacycloalcanes (PAC) immobilisés sur le support solide (S) répondent à la formule (II) précitée.

Des composés polyazacycloalcanes particulièrement bien adaptés à la mise en oeuvre de la deuxième variante de l'invention sont des composés répondant à la formule (II) donnée ci-dessus, où a = c = 2. Par ailleurs, dans les composés de formule (II), il se révèle souvent préférable que b = d = 3, et ce tout notamment lorsque a = c = 2 (le cas b = 3 et d = 2 et le cas b = 2 et d = 3 sont également envisageables, notamment lorsque a = c = 2, mais ils se révèlent souvent moins intéressants).

Un matériau extractant selon la deuxième variante de l'invention qui se révèle généralement particulièrement bien adapté à titre de matériau extractant comprend des composés polyazacycloalcanes (PAC) immobilisés sur le support solide (S) répondant à la formule (IIa) suivante (de préférence à l'exclusion de tout autre composé polyazacycloalcane) : 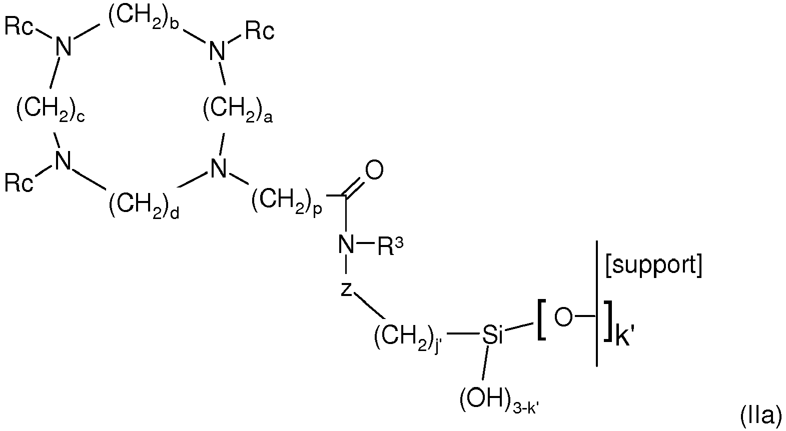 où :
a, b, c, d, p et les groupements Rc et R³ ont les significations données plus haut pour la formule (II) ;
z est un groupe hydrocarboné divalent, linéaire ou ramifié, saturé ou insaturé, éventuellement cyclisé en tout ou partie (par exemple sous la forme d'un groupement aryle) et éventuellement interrompu par un ou plusieurs hétéroatomes (z peut par exemple être un groupe alkylène divalent content de 1 à 8 atomes de carbone, par exemple 2, 3, 4 ou 5 atomes de carbone. Selon un mode de réalisation spécifique, z peut comprendre un groupe carbonyle (par exemple inclus dans un groupe urée);
j' est un entier égal à 0, 1, 2 ou 3 ; et
k', qui représente le nombre de liaisons entre l'espèce cyclique et le support solide (S), est un entier égal à 1, 2 ou 3.

Selon un mode de réalisation particulier de la deuxième variante de l'invention, les composés polyazacycloalcanes (PAC) immobilisés sur le support solide (S) répondent à l'une des formules ci-dessous : 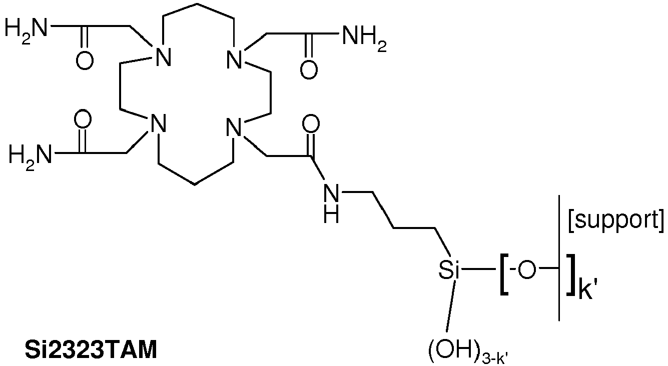 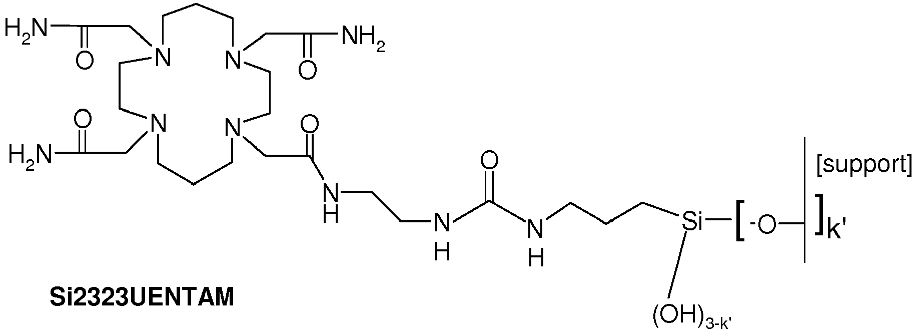 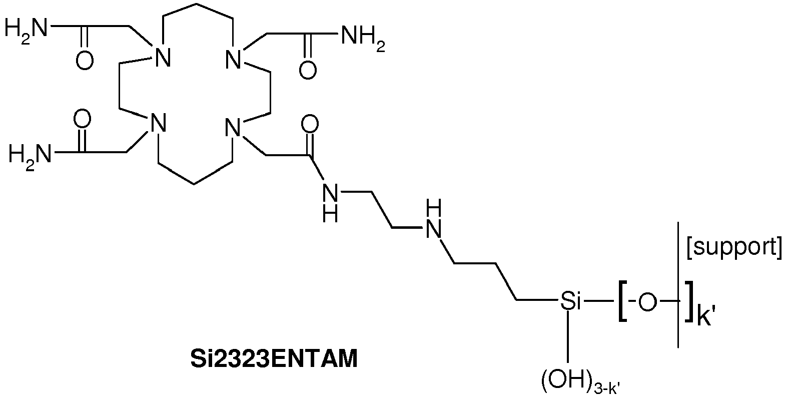 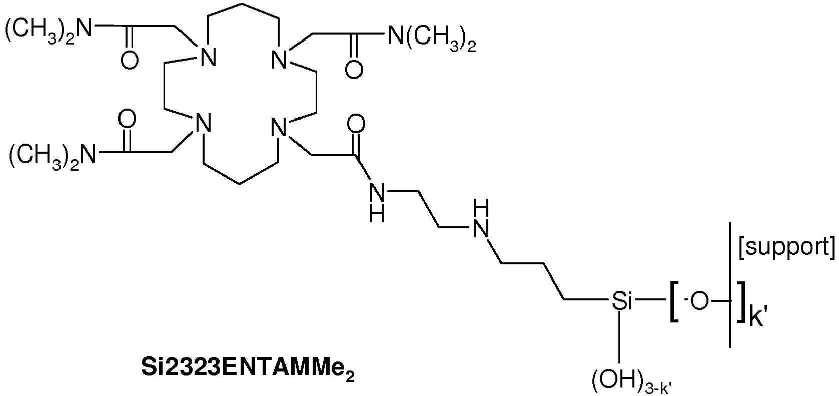 où k' est tel que défini plus haut.

Selon un aspect particulier, divulgué est un procédé permettant d'accéder aux matériaux extractants définis plus haut. Ce procédé de préparation des matériaux comporte, de façon générale, les étapes ci-après :
(E1) on fournit un support solide comportant, en surface, des fonctions Fs capables de réagir avec des fonctions complémentaires, dites Fc, pour former une liaison chimique covalente ;
(E2) on prépare des composés polyazacycloalcanes fonctionnalisés (PAC^{f}) porteurs d'une fonction Fc du type précité, à partir de composés polyazacycloalcanes (PAC⁰) ayant un cycle comportant au moins 4 atomes d'azote,
en fixant (en une ou plusieurs étapes) un groupe fonctionnel coordinant sur chacun des atomes d'azote du cycle des composés polyazacycloalcanes (PAC⁰),
   où chacun desdits groupes fonctionnels coordinants fixés sur les azotes du cycle est, indépendamment des autres :
   un groupe coordinant Rc répondant à la formule générale :

      -(CH₂)ₙ-C(=O)-NR¹R²
   où n, R¹ et R² ont les significations précitées ;
      ou
   un groupe coordinant et réactif Rcr répondant à la formule générale suivante :

      -(CH₂)ₚ-C(=O)-N R³-(P)-G¹

      où :
      p et R³ ont les significations précitées ;
      -(P)- représente une liaison chimique ou bien une chaîne hydrocarbonée, linéaire ou ramifiée, saturée ou insaturée, éventuellement cyclisée en tout ou partie (par exemple sous la forme d'un groupement aryle) et éventuellement interrompue par un ou plusieurs hétéroatomes, liée par au moins une liaison covalente au support solide (S) ; et
      -G¹ est un groupe fonctionnel porteur d'une fonction Fc capable de réagir avec les fonctions Fs portées par le support solide fournit dans l'étape (E1) pour former une liaison covalente entre les polyazacycloalcanes (PAC^{f})
étant entendu que, dans le cas où aucun des groupes fonctionnels fixés sur les azotes du cycle n'est un groupe Rcr, alors, les polyazacycloalcanes (PAC^{f}) sont en outre fonctionnalisés sur un des atomes de carbone du cycle par un groupe réactif Rr de formule générale -(Q)-G², où :
   -(Q)- représente une liaison chimique ou bien une chaîne hydrocarbonée, linéaire ou ramifiée, saturée ou insaturée, éventuellement cyclisée en tout ou partie (par exemple sous la forme d'un groupement aryle) et éventuellement interrompue par un ou plusieurs hétéroatomes, liée par au moins une liaison covalente au support solide (S) ; et
   -G² est un groupe fonctionnel porteur d'une fonction Fc capable de réagir avec les fonctions Fs portées par le support solide fourni dans l'étape (E1) pour former une liaison covalente entre les polyazacycloalcanes (PAC^{f}),
   et
(E3) on met en contact les polyazacycloalcanes fonctionnalisés (PAC^{f}) obtenus dans l'étape (E2) avec le support solide fourni dans l'étape (E1).

Le procédé de l'invention mettant en oeuvre les étapes (E1), (E2) et (E3) ci-dessus met spécifiquement en oeuvre la réaction de fonctions Fs portée par le support solide fourni dans l'étape (E1) avec des fonctions complémentaires Fc portées par les polyazacycloalcanes fonctionnalisés (PAC^{f}) préparés dans l'étape (E2), ces fonctions Fc pouvant être portées par un groupe Rcr ou par un groupe Rc introduit dans l'étape (E2).

Les fonctions Fs portées par le support peuvent être des fonctions inhérentes audit support (fonctions -OH par exemple lorsque le support est un oxyde minéral tel qu'un gel de silice) ou bien des fonctions greffées sur ledit support (des fonctions de type -Cl ou -NH₂ par exemple), l'étape (E1) comprenant alors une étape préalable de fonctionnalisation du support par les groupes Fs.

A titre non limitatif, les fonctions Fs portées par le support solide fourni dans l'étape (E1) et les fonctions complémentaires Fc portées par les polyazacycloalcanes fonctionnalisés (PAC^{f}) obtenus dans l'étape (E2) peuvent par exemple être choisies parmi les couples de fonctions Fs / Fc ci-dessous :

| | | |
|---|---|---|
| Fs = -OH / | Fc = -Si(OR)₃ | où R est un groupe alkyle comprenant de 1 à 4 atomes de carbone (typiquement 1 ou 2) ; |
| Fs = -X / | Fc = -NH₂ | où X est un halogène (de préférence Cl) ; |
| Fs = -Si-H / | Fc = -CH₂-CH=CH₂ | ; |
| Fs = -Si-H / | Fc = -Ph-CH=CH₂ | où Ph représente un noyau aromatique substitué ou non (par exemple un noyau benzène, substitué ou non). |

Une spécificité importante du procédé de l'invention est que l'étape (E2) est spécifiquement conduite de façon à ce que les composés polyazacycloalcanes (PAC^{f}) soient fonctionnalisés en fixant un groupe fonctionnel coordinant sur chacun des atomes d'azote du cycle des composés polyazacycloalcanes (PAC⁰). Ceci est assuré dans l'étape (E2) en fonctionnalisant chacun des azotes du cycle polyazacycloalcane par un groupement Rc ou Rcr du type précité.

On préfère en général que l'étape (E2) soit conduite en fixant le moins possible de groupes fonctionnels coordinants et réactifs de type Rcr, ce par quoi on obtient *in fine* un matériau où les polyazacycloalcanes sont porteurs d'un nombre réduit de groupes coordinants et liants de type RcL tels que définis plus haut dans la présente description. Ainsi, selon un mode de réalisation intéressant du procédé de l'invention, on préfère qu'au plus un des groupes fonctionnels coordinants fixés dans l'étape (E2) soit un groupe coordinant et réactif de type Rcr du type précité, ce par quoi, dans le matériau synthétisé, les groupes coordinants portés par les atomes d'azote du cycle des composés polyazacycloalcanes (PAC) comprennent au plus un groupe coordinant et liant RcL.

De façon générale, lorsqu'on fixe dans l'étape (E2) un groupe coordinant ou un groupement coordinant et réactif Rcr sur un des atomes d'azote du cycle des composés polyazacycloalcanes (PAC⁰), ce groupement peut être greffé en une seule ou en plusieurs étapes. Par ailleurs, on peut obtenir un groupement Rcr par modification d'un groupement de type Rc greffé préalablement. Ainsi, selon un mode de réalisation particulier l'étape (E2) du procédé de l'invention peut typiquement être conduite en greffant (en une ou plusieurs étapes) un groupement coordinant Rc sur chacun des atomes d'azote du cycle des composés polyazacycloalcanes (PAC⁰), puis en introduisant une fonction Fc sur les composés polyazacycloalcanes modifiés ainsi obtenus, cette introduction pouvant être effectuée soit en greffant un groupe Rc sur le cycle et/ou en convertissant un ou plusieurs des groupes Rc en des groupes Rcr (cette conversion d'un groupe Rc en Rcr s'opère en fonctionnalisant ledit groupe Rc par une fonction Fc).

Selon un mode de réalisation particulier adapté pour la préparation de matériaux extractants selon la première variante de l'invention, où les composés polyazacycloalcanes (PAC) ne contiennent pas de groupe RcL, l'étape (E2) peut par exemple être conduite comme suit :
- on fixe (en une ou plusieurs étapes) un groupe coordinant Rc tel que défini précédemment sur chacun des atomes d'azote du cycle des composés polyazacycloalcanes (PAC⁰) ;
   et, préalablement ou postérieurement,
- les polyazacycloalcanes (PAC^{f}) sont en outre fonctionnalisés sur un des atomes de carbone du cycle par un groupe réactif Rr de formule -(Q)-G² telle que définie plus haut.

Lorsque le procédé est destiné à fournir des matériaux extractants porteurs de polyazacycloalcanes de formule (I) selon la première variante les composés polyazacycloalcanes (PAC^{f}) préparés dans l'étape (E2) répondent avantageusement à la formule générale (If) suivante : 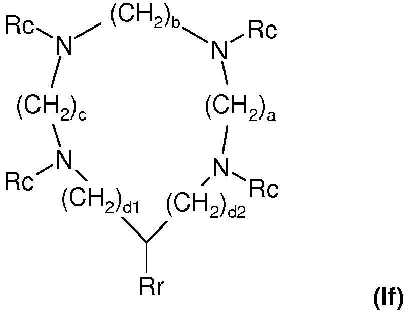 où :
a, b, c, d1, d2 et Rc ont les définitions données plus haut pour la formule (I) ; et
Rr est un groupe réactif de formule générale -(Q)-G² ayant la définition précitée.

Selon un premier mode de réalisation spécifique qui permet d'obtenir des matériaux extractants porteurs de polyazacycloalcanes de formule (la) selon la première variante le procédé est conduit comme suit :
- le support solide fourni dans l'étape (E1) est un gel de silice qui comporte ses fonctions -OH de surface à titre de fonctions Fs ; et
- les composés (PAC^{f}) préparés dans l'étape (E2) sont des composés porteurs de fonctions trialcoxysilanes -Si(OR)₃ à titre de fonctions Fc, qui répondent à la formule générale (If-a1) suivante : 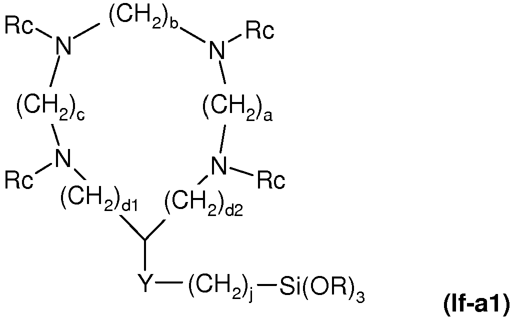 où :
   a, b, c, d1, d2, Rc, -Y- et j sont tels que définis plus haut pour la formule (la) ; et
   R est un groupe alkyle comprenant de 1 à 4 (typiquement 1 ou 2) atomes de carbone.

De préférence, selon ce premier mode de réalisation particulier, les composés (PAC^{f}) préparés dans l'étape (E2) répondent à la formule (If-a1.1) suivante : 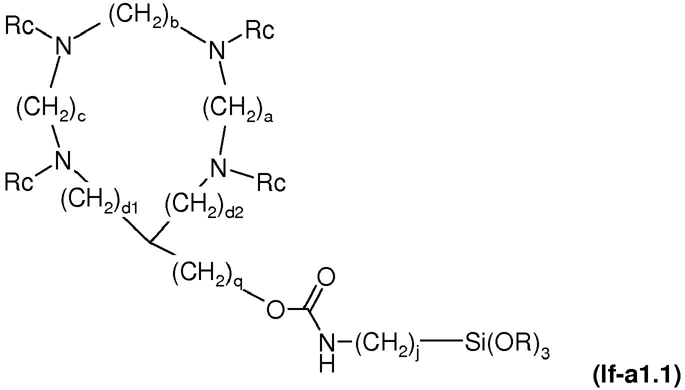 où :
a, b, c, d1, d2, Rc, j et R sont tels que définis plus haut pour la formule (la) ; et
q est un entier valant 1, 2, 3 ou 4,
lesdits composés (If-a1.1) étant obtenus dans l'étape (E2) en mettant en oeuvre la succession d'étapes suivantes :

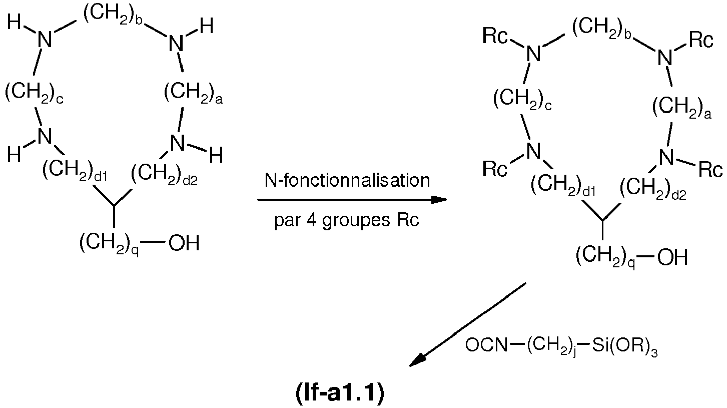

Selon un deuxième mode de réalisation spécifique permettant d'obtenir des matériaux extractants porteurs de polyazacycloalcanes de formule (la) selon la première variante le procédé est conduit comme suit :
- le support solide fourni dans l'étape (E1) est un gel de silice modifié qui comporte des fonctions -X de surface à titre de fonctions Fs, où X est un halogène (de préférence Cl), ce gel de silice modifié étant obtenu par greffage d'un trialcoxysilane de formule X-(CH₂)ⱼ-Si(OR)₃, où j est tel que défini plus haut pour la formule (la), et R est un groupe alkyle comprenant de 1 à 4 (typiquement 1 ou 2) atomes de carbone ; et
- les composés (PAC^{f}) préparés dans l'étape (E2) sont des composés porteurs de fonctions -NH₂ à titre de fonctions Fc, qui répondent à la formule générale (If-a2) suivante : 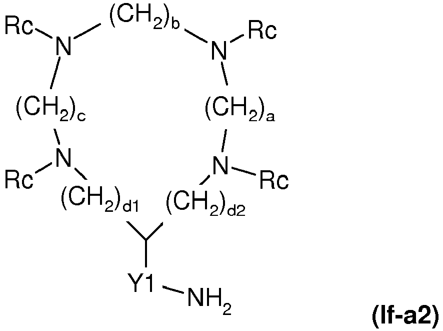 où :
   a, b, c, d1, d2, et Rc sont tels que définis plus haut pour la formule (la) ; et
   -Y1- est un groupe hydrocarboné divalent, linéaire ou ramifié, saturé ou insaturé, éventuellement cyclisé en tout ou partie (par exemple sous la forme d'un aryle) et éventuellement interrompu par un ou plusieurs hétéroatomes.

De préférence, selon ce deuxième mode de réalisation particulier, les composés (PAC^{f}) préparés dans l'étape (E2) répondent à la formule (If-a2.1) suivante : 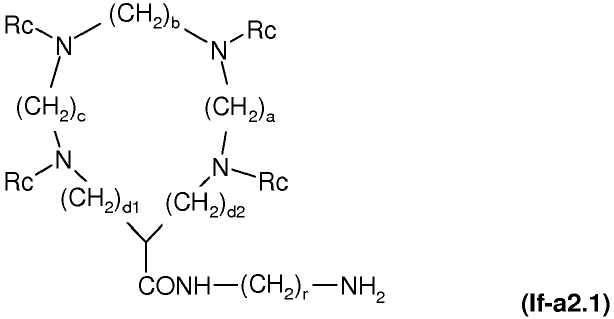 où :
a, b, c, d1, d2, et Rc sont tels que définis plus haut pour la formule (la) ; et
r est un entier valant 1, 2, 3 ou 4,
lesdits composés (If-a2.1) étant obtenus dans l'étape (E2) en mettant en oeuvre la succession d'étapes suivantes : 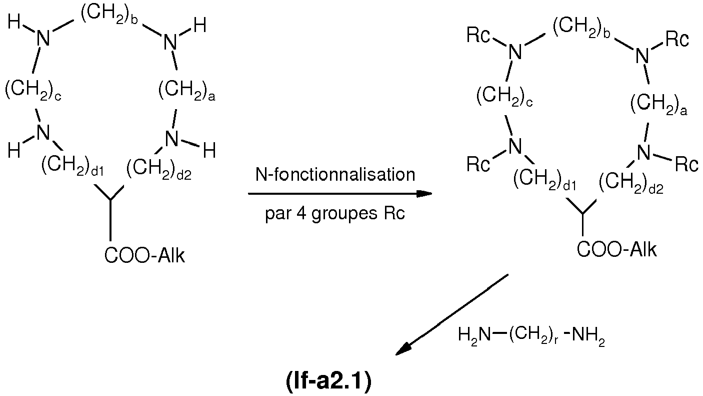 où Alk est un groupe alkyle comprenant de 1 à 4 atomes de carbone.

Selon un mode de réalisation particulier adapté pour la préparation de matériaux extractants selon la deuxième variante de l'invention où les composés polyazacycloalcanes (PAC) contiennent un seul groupe RcL, l'étape (E2) peut être conduite comme suit :
on fixe un groupe coordinant réactif Rcr sur un des atomes d'azote du cycle des composés polyazacycloalcanes (PAC⁰), en une ou plusieurs étapes ;
et, préalablement ou postérieurement,
on fixe des groupes coordinants Rc tels que définis plus haut sur chacun des autres atomes d'azote du cycle des composés polyazacycloalcanes (PAC⁰), en une ou plusieurs étapes.

Lorsque le procédé de l'invention est destiné à fournir des matériaux extractants porteurs de polyazacycloalcanes de formule (II) selon la deuxième variante de l'invention, les composés polyazacycloalcanes (PAC^{f}) préparés dans l'étape (E2) répondent avantageusement à la formule générale (IIf) suivante : 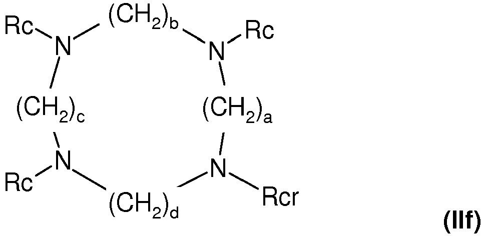 où :
a, b, c, d et Rc sont tels que définis plus haut pour la formule (II); et
Rcr est un groupe coordinant et réactif répondant à la formule générale -(CH₂)ₚ-C(=O)-NR³-(P)-G¹ telle que définie plus haut.

Selon un premier mode de réalisation spécifique permettant d'obtenir des matériaux extractants porteurs de polyazacycloalcanes de formule (IIa) selon la deuxième variante de l'invention, le procédé de l'invention est conduit comme suit :
- le support solide fourni dans l'étape (E1) est un gel de silice, qui comporte ses fonctions -OH de surface à titre de fonctions Fs ; et
- les composés (PAC^{f}) préparés dans l'étape (E2) sont des composés porteurs de fonctions trialcoxysilanes -Si(OR)₃ à titre de fonctions Fc, qui répondent à la formule générale (IIf-a1) suivante : 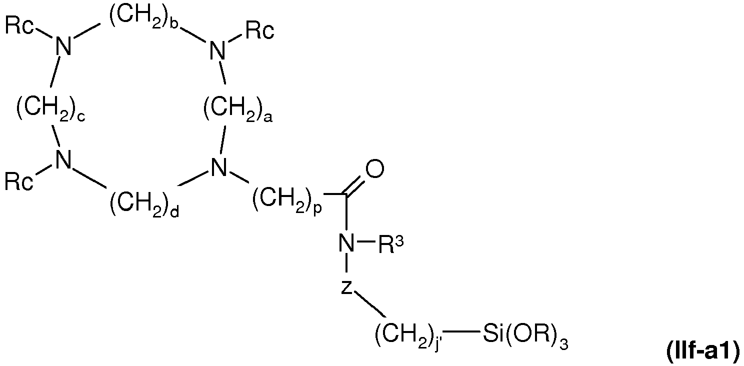 où :
   a, b, c, d, p, Rc, R³ , z et j' sont tels que définis plus haut pour la formule (IIa) ; et
   R est un groupe alkyle comprenant de 1 à 4 (typiquement 1 ou 2) atomes de carbone.

Selon ce premier mode de réalisation particulier, dans l'étape (E2), la préparation des composés (PAC^{f}) précités de formule (IIf-a1) peut par exemple mettre en oeuvre l'un ou l'autre des schémas réactionnels ci-dessous : 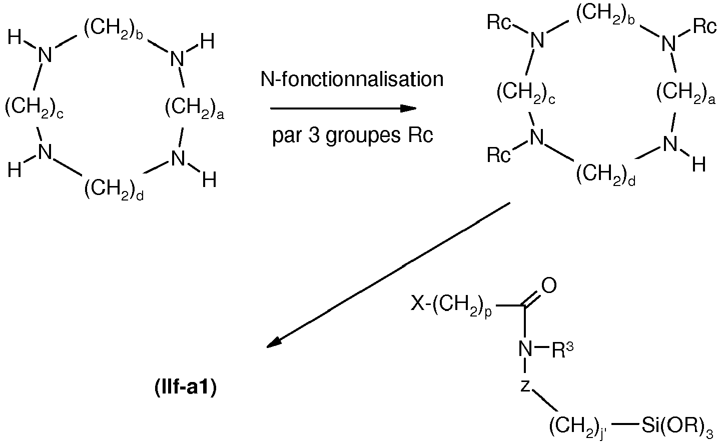 où X est un halogène, de préférence Cl ; 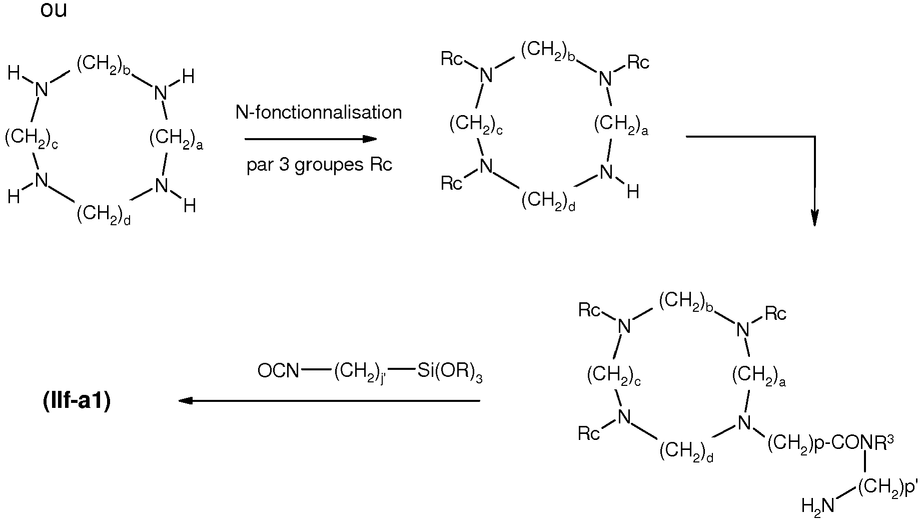 où p' = 1, 2 ou 3.

Selon un deuxième mode de réalisation spécifique permettant d'obtenir des matériaux extractants porteurs de polyazacycloalcanes de formule (IIa) selon la deuxième variante de l'invention, le procédé de l'invention est conduit comme suit :
- le support solide fourni dans l'étape (E1) est un gel de silice modifié qui comporte des fonctions -X de surface à titre de fonctions Fs, où X est un halogène (de préférence Cl), ce gel de silice modifié étant obtenu par greffage d'un trialcoxysilane de formule X-(CH₂)_{j'}-Si(OR)₃ , où j' est tel que défini plus haut pour la formule (IIa), et R est un groupe alkyle comprenant de 1 à 4 (typiquement 1 ou 2) atomes de carbone ; et
- les composés (PAC^{f}) préparés dans l'étape (E2) sont des composés porteurs de fonctions -NH₂ à titre de fonctions Fc, qui répondent à la formule générale (IIf-a2) suivante : 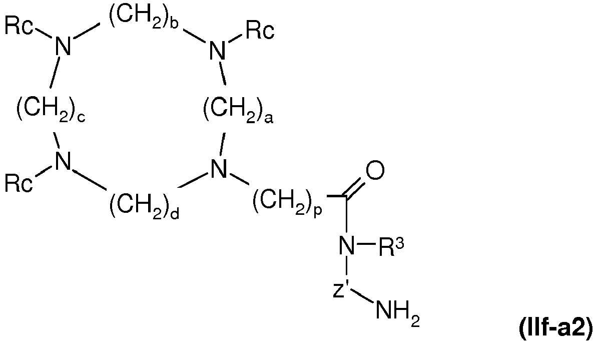 où :
   a, b, c, d, p, Rc et R³ sont tels que définis plus haut pour la formule (IIa) ; et
   z' est un groupe hydrocarboné divalent, linéaire ou ramifié, saturé ou insaturé, éventuellement cyclisé en tout ou partie (par exemple sous la forme d'un aryle) et éventuellement interrompu par un ou plusieurs hétéroatomes. z' peut typiquement être un groupe alkylène divalent contenant de 1 à 8 atomes de carbone, par exemple 2, 3, 4 ou 5 atomes de carbone. Selon un mode de réalisation spécifique, z' peut comprendre un groupe carbonyle, par exemple inclus dans une fonction urée.

De préférence, selon ce mode de réalisation particulier, dans l'étape (E2), la préparation des composés (PAC^{f}) de formule (IIf-a2) met en oeuvre la succession d'étapes suivantes : 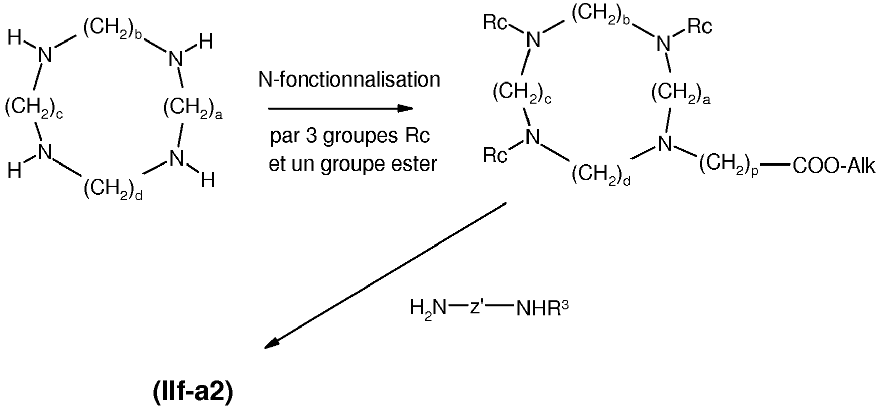 où Alk est un groupe alkyle comprenant de 1 à 4 atomes de carbone.

Selon un troisième mode de réalisation spécifique permettant d'obtenir des matériaux extractants porteurs de polyazacycloalcanes de formule (IIa) selon la deuxième variante de l'invention, le procédé de l'invention est conduit comme suit :
- le support solide fourni dans l'étape (E1) est un gel de silice modifié qui comporte des fonctions -Si-H de surface, ce gel de silice modifié étant obtenu par greffage d'un trialcoxysilane de formule H-Si(OR)₃ , où R est un groupe alkyle comprenant de 1 à 4 (typiquement 1 ou 2) atomes de carbone ; et
- les composés (PAC^{f}) préparés dans l'étape (E2) sont des composés porteurs de fonctions -CH=CH₂ à titre de fonctions Fc, qui répondent à la formule générale (IIf-a3) suivante : 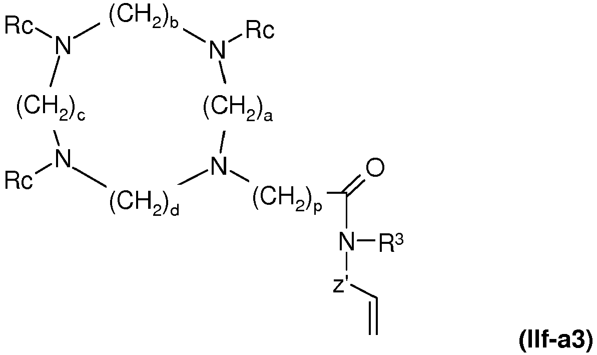 où :
   a, b, c, d, p, Rc, et R³ sont tels que définis plus haut pour la formule (II) ; et
   -z'- est un groupe hydrocarboné divalent, linéaire ou ramifié, saturé ou insaturé, éventuellement cyclisé en tout ou partie et éventuellement interrompu par un ou plusieurs hétéroatomes. z' peut typiquement être un groupe alkylène divalent content de 1 à 8 atomes de carbone, par exemple 2, 3, 4 ou 5 atomes de carbone. Selon un mode de réalisation spécifique, z' peut comprendre un groupe carbonyle, par exemple inclus dans une fonction urée.

De préférence, selon ce mode de réalisation particulier, dans l'étape (E2), la préparation des composés (PAC^{f}) de formule (IIf-a3) met en oeuvre la fonctionnalisation du composé de formule suivante : 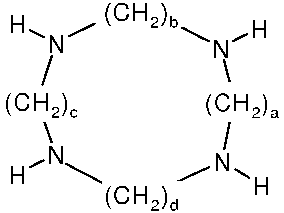 par trois groupes Rc du type précité, identiques ou différents, et un groupe de formule -(CH₂)ₚ-(C=O)-NR³-z'-CH=CH₂. Selon un mode de réalisation envisageable, on fonctionnalise d'abord 3 des atomes d'azote du composé tétracyclique ci-dessus par trois groupes Rc (en une ou plusieurs étapes) ; puis on fonctionnalise le dernier atome d'azote par un groupe -(CH₂)ₚ-(C=O)-NR³-z'-CH=CH₂. Alternativement, on peut à l'inverse fonctionnaliser d'abord un des atomes d'azote du composé tétracyclique par un groupe -(CH₂)ₚ-(C=O)-NR³-z'-CH=CH₂ ; puis fonctionnaliser (en une ou plusieurs étapes) les trois autres atomes d'azote du cycle par trois groupes Rc.

Selon un autre aspect particulier, la présente invention a pour objet des utilisations des matériaux de l'invention.

De façon très générale, un matériau selon l'invention s'avère utile pour piéger des cations métalliques, notamment des ions Pb²⁺, mais également des cations Cd²⁺ , Cu²⁺ , Zn²⁺, Ni²⁺, dissous au sein d'un milieu liquide, notamment au sein d'un milieu aqueux.

Dans ce cadre, les matériaux de l'invention peuvent typiquement être mis en oeuvre dans des procédés de purification de milieux liquides (notamment aqueux) contaminés par des cations métalliques, où on met en contact le milieu à traiter avec un matériau extractant selon l'invention. Ces procédés, qui peuvent être mis en oeuvre selon un mode statique ou dynamique, constituent, selon un aspect particulier, un autre objet de la présente invention.

Un procédé de purification mettant en oeuvre un matériau extractant selon l'invention se révèle particulièrement intéressant lorsque le milieu liquide (notamment aqueux) soumis au traitement de purification est initialement contaminé par des cations Pb²⁺. Comme indiqué plus haut dans la présente description, la mise en oeuvre des matériaux extractants dans ce cadre permet d'atteindre aisément des teneurs en plomb très faibles dans le milieu traité, typiquement avec une teneur résiduelle en plomb inférieure à 10 ppb, y compris lorsque le procédé de purification est conduit selon un mode dynamique.

Le procédé de purification de l'invention peut être avantageusement mis en oeuvre pour un traitement de purification d'un courant d'eau potable, par exemple en employant le matériau extractant de l'invention dans une cartouche épuratoire placée en amont ou en aval d'un robinet de distribution domestique d'eau potable.

Le procédé de purification de l'invention trouve également une utilisation intéressante pour le traitement d'effluents liquides industriels (notamment d'effluents aqueux) ou d'eaux usées.

Différents aspects et avantages de l'invention ressortiront encore davantage au vu des exemples illustratifs exposés ci-après.

### EXEMPLE 1 : Préparation du matériau Si2323TAM

### (condensation directe d'un précurseur macrocyclique porteur d'un groupement silane sur un gel de silice)

Dans cet exemple, un matériau de formule Si2323TAM telle que définie plus-haut dans la présente description a été préparé, selon le schéma réactionnel ci-après :

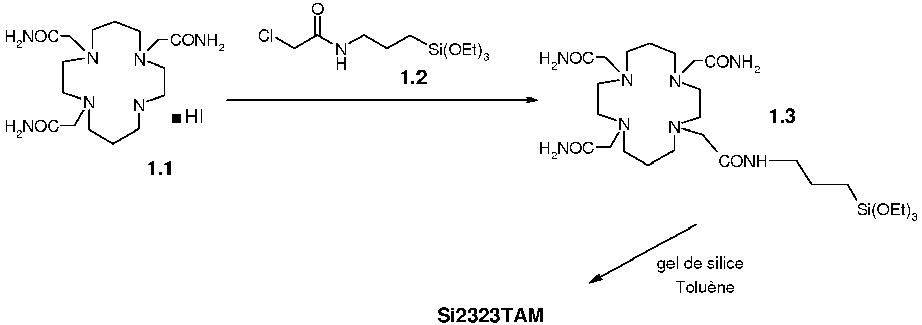

Plus précisément, on a mis en oeuvre le protocole ci-après :

### ▪ Préparation du composé 1.1 (TE3AM•HI)

Ce composé est obtenu selon le mode opératoire décrit dans Tetrahedron Lett., vol. 40, pp. 381-382 (1999).

### ▪ Préparation du composé 1.2 (N-propyltriéthoxysilyl-2-chloroacétamide)

Sous atmosphère d'azote, 75 g (540 mmol) de carbonate de potassium et 21,5 mL (270 mmol) de chlorure de chloroacétyle sont introduits dans 200 mL de tétrahydrofurane. Le mélange est refroidi à 0 °C.

On ajoute au mélange refroidi 60 g (270 mmol) d'aminopropyltriéthoxysilane, dissous dans 30 mL de tétrahydrofurane, en 15 minutes au moyen d'une ampoule à brome isobare. L'agitation est maintenue à température ambiante pendant 18 h puis le mélange réactionnel est filtré sur célite.

Après élimination sous vide du solvant contenu dans le filtrat, on a obtenu 46,4 g du composé **1.2** sous la forme d'une huile jaune pâle (rendement = 57 %) ayant les caractéristiques RMN ci-après :
RMN ¹H (200 MHz, CDCl₃) : 0,60 (t, 2H, ³*J* = 7,4 Hz, CH₂Si) ; 1,20 (t, 9H, ³*J* = 6,0 Hz, OCH₂CH₃) ; 1,65 (p, 2H, ³*J* = 7,4 Hz, CONHCH₂CH₂) ; 3,25 (q, 2H, ³*J* = 7,4 Hz, CONHCH₂) ; 3,80 (q, 6H, ³*J* = 6, 0 Hz, OCH₂CH₃) ; 4,00 (s, 2H, ClCH₂) ; 6,77+8,25 (m, 1H, CONH *cis* + *trans).*
RMN ¹³C (50 MHz, CDCl₃) : 7,9 (CH₂Si) ; 18,6 (OCH₂CH₃) ; 23,0 (NHCH₂CH₂) ; 42,3 (NHCH₂) ; 42,9 (ClCH₂) ; 58,7 (OCH₂CH₃) ; 166,2 (CO).

### ▪ Préparation du précurseur 1.3

Sous atmosphère d'azote, 39,5 g (79 mmol) de TE3AM•HI **(composé 1.1),** 23,5 g (79 mmol) du composé **1.2** et 27,4 g (200 mmol) de carbonate de potassium sont mélangés dans 800 mL d'acétonitrile fraîchement distillé. La suspension obtenue est portée au reflux du solvant pendant 44 h. Le solvant est ensuite évaporé. Le composé obtenu est solubilisé dans 1 L de chloroforme et le résidu solide éliminé par filtration.

Après évaporation du solvant, on isole 31 g de composé 1.3, sous la forme d'un solide jaune (rendement = 62 %) ayant les caractéristiques RMN ci-après :
RMN ¹H (500 MHz, DMSO-d⁶) : 0,62 (m, 2H, CCH₂Si) ; 1,23 (t, 9H, ³*J* = 6,0 Hz, OCH₂CH₃) ; 1,59-1,68 (m, 4H, CH₂CH₂CH₂) ; 1,96 (m, 2H, CH₂CH₂Si) ; 2,64 (m, 16H, CH₂N) ; 3,06 (m, 8H, CH₂ CO) ; 3,24 (m, 2H, CONHCH₂) ; 3,82 (q, 6H, ³*J* = 6,0 Hz, OCH₂CH₃) ; 7,03 (m, 6H, CONH₂).
RMN ¹³C (125 MHz, DMSO-d⁶) : 8,5 (CH₂Si) ; 19,1 (OCH₂CH₃) ; 24,8 (CH₂CH₂CH₂) ; 25,9 (CH₂CH₂CH₂); 55,4 (CH₂N) ; 58,6 (OCH₂CH₃) ; 171,5 (CO) ; 175,8 (CO).
Spectrométrie de masse (MALDI-TOF) *m*/*z* : 632,5s [L]^{+•}.

### ▪ Greffage du précurseur 1.3 sur gel de silice

Le greffage est effectué en mettant en contact 27,7 g (soit 44 mmol) de précurseur **1.3** avec 60 g de silice déshydratée par distillation azéotropique (Kieselgel 60 commercialisé par Merck ; fraction granulométrique = 0,25-0,40 mm ; surface spécifique = 550 m² g⁻¹). L'opération est conduite sous atmosphère d'azote, dans 1,25 L de toluène fraîchement distillé et chauffé à 110° C, sous agitation mécanique durant 40 h.

Le gel modifié obtenu est récupéré à température ambiante par filtration, lavé à l'éthanol, à l'éther, puis séché sous vide et tamisé. On obtient ainsi 64,4 g de gel de silice modifié **Si2323TAM** ayant les caractéristiques ci-après :
RPE (gel métallé au cuivre, T = 100 K) : *g*⊥ = 2,10 ; *g_{∥}* = 2,23 ; *a_{∥}* = 147x 10 cm ⁻¹.
IR (réflexion diffuse, KBR, cm ⁻¹) : 3305 (v_{NH}) ; 2946 (v_{CH}) ; 2820 (v_{CH}) ; 1673 (v_{CO}) ; 1092 (v_{SiO}) ; 795 (δ_{OSiO}).
Analyse élémentaire de l'élément azote : 0,32 mmol g⁻¹ (% N : 3,57 %). Fluorescence X du cuivre : 0,24 mmol g⁻¹.
Surface spécifique (BET) : 338 m² g⁻¹.
Volume total d'azote adsorbé : 0,46 cm³ g⁻¹.
Diamètre moyen des pores (BJH) : 40 Ǻ (distribution 20-110 Ǻ).

### EXEMPLE 2 : Préparation du matériau Si2223TAMMe₂

### (condensation directe d'un précurseur macrocyclique porteur d'un groupement silane sur un gel de silice)

Dans cet exemple, un matériau de formule Si2223TAMMe₂ telle que définie plus-haut dans la présente description a été préparé, selon le schéma réactionnel ci-après :

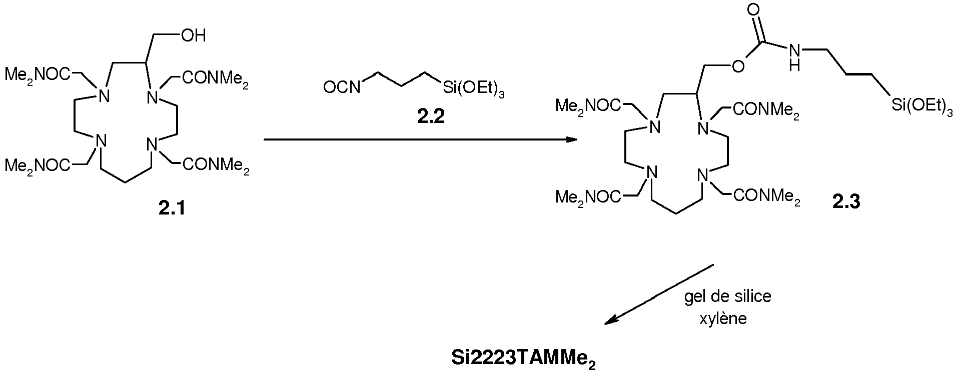

Plus précisément, on a mis en oeuvre le protocole ci-après :

### ▪ Préparation du composé 2.1

Le précurseur **2.1** est obtenu au départ de la tétraamine 1,4,7,10-tétraazacyclotridéc-5-yl-méthanol dont la préparation a été décrite dans la demande internationale WO 03/029228.

Une solution contenant 7,70 g (35,60 mmol) de tétraamine 1,4,7,10-tétraazacyclotridéc-5-yl-méthanol dans 500 mL d'acétonitrile et 39,36 g (284,80 mmol) de carbonate de potassium est portée à reflux avant d'additionner en une seule portion 21,66 g (176,20 mmol) de 2-chloro-*N*,*N*-diméthylacétamide. Le mélange est ensuite laissé sous agitation à reflux pendant 5 jours.

Après filtration sur célite et évaporation du solvant sous vide, on obtient une huile rouge résiduelle qui est purifiée par chromatographie sur colonne d'alumine (éluant : dichlorométhane/méthanol 98:2 v/v).

On obtient alors 5,5 g du composé **2.1,** sous la forme d'une huile jaune (rendement = 28 %) ayant les caractéristiques ci-après :
RMN ¹H (500 MHz, CDCl₃) : 1,56 (m, 2H) ; 2,39 (m, 1H) ; 2,45-3,10 (m, 14H) ; 2,85 (s, 3H) ; 2,87 (s, 9H) ; 2,93 (s, 3H) ; 2,97 (s, 3H) ; 3,01 (s, 3H) ; 3,02 (s, 3H) ; 3,15-3,6 (m, 11 H).
RMN ¹³C (125 MHz, CDCl₃) : 24,2 (CH₂CH₂CH₂) ; 35,8 (3C, NCH₃) ; 36,1 (NCH₃) ; 36,8 (NCH₃) ; 37,1 (NCH₃) ; 37,4 (2C, NCH₃) ; 50,8 (2C, NCH₂) ; 50,9 (NCH₂) ; 51,5 (NCH₂) ; 52,1 (2C, NCH₂) ; 54,7(NCH₂) ; 54,8 (NCH₂) ; 57,4 (2C, CH₂CO) ; 58,0 (CH₂CO) ; 60,2 (CH₂CO) ; 62,5 (CH₂OH) ; 170,9 (CO) ; 171,0 (CO) ; 171,1 (CO) ; 172,8 (CO).
Spectrométrie de masse (MALDI-TOF) *m*/*z :* 557,7 [L]^{+•}.

### ▪ Préparation du composé 2.3

A une solution de 7,40 g (13,29 mmol) du composé **2.1** dissous dans 100 mL de dichlorométhane en présence de 3 mL de triéthylamine, on a ajouté 3,90 g (soit 13,29 mmol) du composé **2.2** (3-isocyanatopropyltriéthoxysilane commercialisé par Aldrich - pureté >95 %).

Le mélange est agité à température ambiante pendant 12 h. L'analyse par spectroscopie infrarouge permet de suivre l'avancement de la réaction et de constater la disparition de la bande caractéristique de la fonction N=C=O à 2272 cm⁻¹.

A l'issue de la réaction, le solvant est évaporé sous vide permettant ainsi d'isoler le composé **2.3** sous la forme d'une huile orange, qui est utilisée sans purification ultérieure dans l'étape ci-dessous.

### ▪ Greffage du précurseur 2.3 sur gel de silice

Le greffage est effectué en mettant en contact la totalité du composé **2.3** (huile orange) obtenue dans l'étape précédente avec 31,00 g de silice déshydratée par distillation azéotropique (Kieselgel 60 - Merck ; fraction granulométrique = 0,25-0,40 mm ; surface spécifique = 550 m² g⁻¹). La réaction est conduite dans 250 mL de xylène distillé qui sont portés à reflux et agités mécaniquement sous atmosphère d'argon pendant 72 h.

Le gel modifié est récupéré à température ambiante par filtration, lavé à l'eau, à l'éthanol et au chloroforme, puis séché sous vide et tamisé.

On obtient ainsi 34,90 g de gel de silice modifié **Si2223CTAMMe₂** ayant les caractéristiques ci-après :
Analyse élémentaire de l'élément azote : 0,22 mmol g⁻¹ (% N : 2,46 %).
Fluorescence X du cuivre : 0,15 mmol g⁻¹.

### EXEMPLE 3 : Préparation du matériau Si2323UENTAM

### (condensation directe d'un précurseur macrocyclique porteur d'un groupement silane sur un gel de silice)

Dans cet exemple, un matériau de formule Si2323UENTAM telle que définie plus haut dans la présente description a été préparé, selon le schéma réactionnel ci-après :

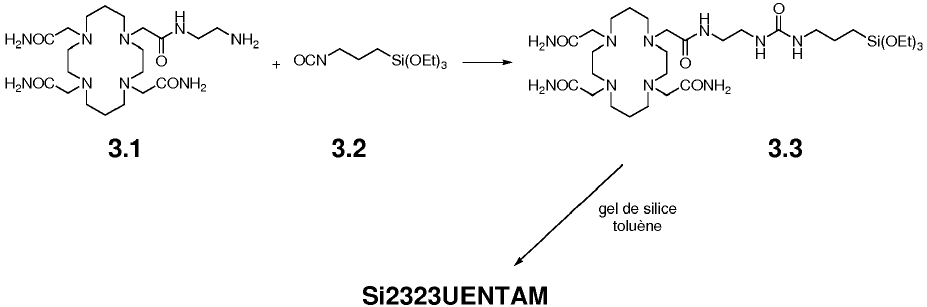

Plus précisément, on a mis en oeuvre le protocole ci-dessous :

### ▪ Préparation du composé 3.1

Ce composé est préparé selon le protocole décrit pour le composé 4.2 de l'exemple 4 ci-après.

### ▪ Préparation du précurseur 3.3

A une solution de 2,96 g (6,3 mmol) de composé **3.1** dissous dans 40 mL d'éthanol absolu fraîchement distillé, on a ajouté 1,64 mL (6,3 mmol) de composé **3.2** (3-isocyanatopropyltriéthoxysilane commercialisé par Aldrich, de pureté > 95 %). Le mélange est chauffé au reflux de l'éthanol pendant 24 h. L'analyse par spectroscopie infrarouge permet de suivre l'avancement de la réaction et de constater la disparition de la bande caractéristique de la fonction N=C=O à 2272 cm⁻¹. Le solvant est évaporé sous vide et le composé **3.3** obtenu est utilisé tel quel dans l'étape suivante.

### ▪ Greffage du précurseur 3.3 sur gel de silice

Le greffage est effectué en mettant en contact 3,5 g (4,87 mmol) de précurseur **3.3** avec 4,87 g de silice déshydratée par distillation azéotropique (Kieselgel 60 - Merck ; fraction granulométrique = 0,25-0,40 mm ; surface spécifique = 550 m² g⁻¹). La réaction est conduite dans 50 mL de toluène distillé porté à reflux sous agitation mécanique, sous atmosphère d'argon, pendant 24 h.

Le gel modifié est récupéré à température ambiante par filtration, lavé au toluène, à l'éther éthylique, puis séché sous vide.

On obtient ainsi 7,83 g de gel de silice modifié **Si2323UENTAM** ayant les caractéristiques suivantes :
Analyse élémentaire de l'élément azote : 0,49 mmol g⁻¹ (% N : 6,86 %).

### Exemple 4 : Préparation du matériau Si2323ENTAM

### (greffage impliquant une substitution nucléophile)

Dans le présent exemple 4, ainsi que dans les deux exemples 5 et 6 qui suivent, on prépare un matériau selon l'invention en faisant réagir un précurseur aminé avec un gel de silice préalablement greffé par des composés porteurs de fonctions -Cl (introduites par réaction de la silice avec des composés chloropropyltriéthoxysilane). Ce gel de silice modifié, dit **SiCl,** qui a la structure schématique suivante : 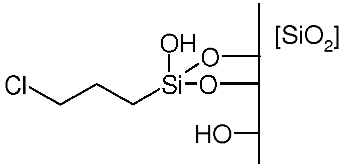 est préparé selon le protocole ci-après :
60 g de silice déshydratée par distillation azéotropique (Kieselgel 60 - Merck ; fraction granulométrique = 0,25-0,40 mm; surface spécifique = 550 m² g⁻¹) et 6 g (25 mmol) de chloropropyltriéthoxysilane sont mélangés dans 100 mL de toluène sous atmosphère d'azote. Le mélange obtenu est maintenu au reflux du solvant pendant 24 h. Après filtration, lavage au dichlorométhane et séchage, le matériau est tamisé. On obtient ainsi le gel **SiCl** recherché, qui a les propriétés suivantes :
IR (réflexion diffuse, KBr, cm⁻¹) : 3624 (v_{OH}) ; 2980 (v_{CH}) ; 2961 (v_{CH}) ; 2936 (v_{CH}) ; 2898 (v_{CH}) ; 1630 (δ_{OH}) ; 1446 (δ_{CH2}) ; 1395 (δ_{CH2}) ; 1096 (v_{SiO}) ; 793 (δ_{OSiO}).
Analyse élémentaire de l'élément chlore : 0,3 mmol g⁻¹ (% Cl = 1,02 %).
Surface spécifique (BET) : 464 m² g⁻¹.
Volume total d'azote adsorbé : 0,61 cm³ g⁻¹.
Diamètre moyen des pores (BJH) : 55 Ǻ (distribution 20-120 A).

Spécifiquement, dans le présent exemple 4, on a préparé un matériau de formule Si2323ENTAM telle que définie plus-haut dans la présente description, selon le schéma réactionnel ci-après :

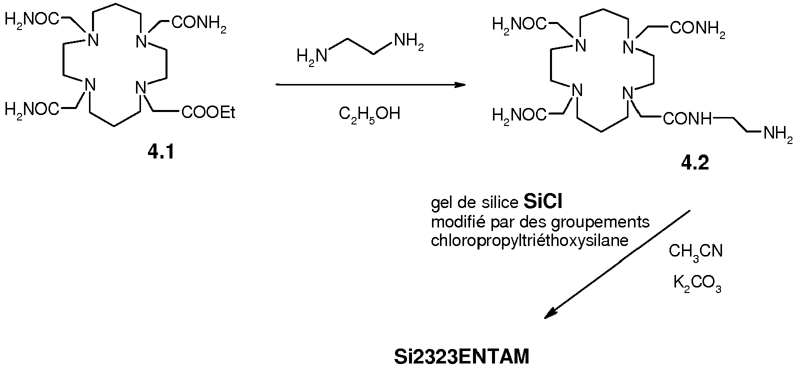

Plus précisément, on a mis en oeuvre le protocole ci-après :

### ▪ Préparation du composé 4.1

Le monoester **4.1** est préparé en maintenant pendant 48 h à reflux 1 L d'acétonitrile contenant 15 g (30 mmol) du triacétamide **1.1,** 5 g (30 mmol) de bromoacétate d'éthyle et 10,5 g (75 mmol) de carbonate de potassium.

Après filtration et évaporation du solvant, 13,5 g du composé désiré **4.1** sont isolés sous la forme d'un solide blanc (rendement = 98 %). Le composé a les caractéristiques suivantes :
RMN ¹H (300MHz, CDCl₃) : 1,14 (t, 3H, ³*J* = 6,0 Hz, OCH₂CH₃) ; 1,55 (m, 4H, CH₂CH₂CH₂) ; 2,50 (s, 16H, CH₂N) ; 2,93 (s, 6H, CH₂CONH₂) ; 3,14 (s, 2H, CH₂COOEt) ; 4,02 (q, 2H, ³*J* = 6,0 Hz, OCH₂CH₃) ; 6,13 (s, 1H, CONH) ; 6,68 (s, 2H, CONH) ; 7,03 (s, 1H, CONH) ; 7,22 (s, 1H, CONH) ; 7,89 (s, 1H, CONH).
RMN ¹³C (75 MHz, CDCl₃) : 14,7 (OCH₂CH₃) ; 26,0 (CH₂CH₂CH₂) ; 26,3 (CH₂CH₂CH₂); 52,4-54,3 (CH₂N) ; 56,1 (CH₂N) ; 59,1 (CH₂CONH₂) ; 59,4 (CH₂COOEt) ; 61,4 (OCH₂CH₃) ; 172,4 (COOEt) ; 176,3 (CONH₂ ) ; 176,5 (CONH₂) ; 176,95 (CONH₂).
Spectrométrie de masse (MALDI-TOF) *m*/*z :* 458,3 [L + H]⁺.

### ▪ Préparation du précurseur 4.2

### (précurseur macrocyclique porteur d'une amine primaire)

A 13 g (32,7 mmol) du composé **4.1** dissous dans 700 mL d'éthanol absolu sont ajoutés 200 équivalents d'éthylènediamine (380 mL ; 6,5 mol). Le mélange réactionnel est maintenu à reflux pendant 24 h sous atmosphère d'azote. Le solvant et l'excédent d'éthylènediamine sont évaporés avant de sécher le résidu sous vide (*T* = 50° C, *P* = 4 torr).

Le composé 4.2 recherché est isolé sous la forme de 13,7 g d'une poudre blanche (rdt = 89 %), ayant les caractéristiques suivantes :
RMN ¹H (300 MHz, D₂O) : 1,61 (m, 4H, CH₂CH₂CH₂) ; 2,49-2,61 (m, 18H, CH₂N) ; 3,03 (m, 8H, CH₂CO) ; 3,15 (t, 2H, ³*J* = 6,4 Hz, CONHCH₂).
RMN ¹³C (75 MHz, D₂O) : 23,2 (CH₂CH₂CH₂) ; 40,4-52,5 (CH₂N) ; 57,8-58,7 (CH₂CO) ; 174,7 (CO) ; 177,0 (CO) ; 177,7 (CO).

### ▪ Greffage du précurseur 4.2 sur le gel SiCl (substitution nucléophile)

Le greffage est effectué en mettant en contact 15 g (32 mmol) de composé **4.2** avec 65 g de silice modifiée **SiCl** et 10 g (72 mmol) de carbonate de potassium dissous dans 600 mL d'acétonitrile. Le milieu est maintenu à reflux sous agitation mécanique pendant 48 h. Après retour à la température ambiante, on obtient après filtration, séchage et tamisage 70 g d'un matériau **Si2323ENTAM** ayant les caractéristiques ci-après :
RPE (gel métallé au cuivre, T = 100 K) : *g*⊥ = 2,07 ; *g_{∥}*= 2,23 ; *a_{∥}*= 156x10⁻⁴ cm⁻¹.
IR (réflexion diffuse, KBr, cm⁻¹) : 3733 (v_{OH}) ; 3294 (v_{OH}) ; 2943 (v_{CH}) ; 2889 (v_{CH}) ; 1669 (v_{CO}) ; 1538 (δ_{CNH}) ; 1456 (V_{CN}) ; 1087 (v_{SiO}) ; 797 (δ_{OSiO}).
Analyse élémentaire de l'élément azote : 0,18 mmol g⁻¹ (% N : 2,22 %).
Fluorescence X du cuivre : 0,18 mmol g⁻¹.
Surface spécifique (BET) : 368 m² g⁻¹.
Volume total d'azote adsorbé : 0,57 cm³ g⁻¹.
Diamètre moyen des pores (BJH) : 60 Ǻ (distribution 20-120 Ǻ).

### Exemple 5 : Préparation du matériau Si2323ENTAMMe₂

### (greffage impliquant une substitution nucléophile)

Dans cet exemple, un matériau de formule Si2323ENTAMMe₂ telle que définie plus-haut dans la présente description a été préparé, selon le schéma réactionnel ci-dessous :

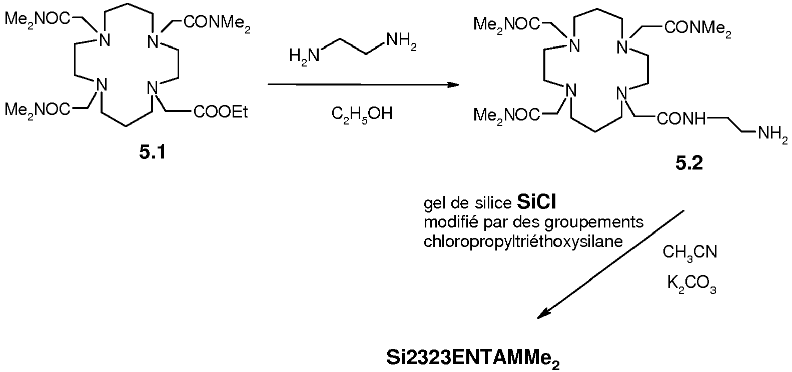

Plus précisément, on a mis en oeuvre le protocole ci-après :

### ▪ Préparation du composé 5.1

Le précurseur **5.1** est préparé en deux étapes à partir du cyclame.

Dans un premier temps, le (1,4,8,11-tétraazacyclotétradec-1-yl)éthanoate d'éthyle est obtenu par lente addition de 6,68 g (40,0 mmol) de bromoacétate d'éthyle sur une solution de 40 g (200,0 mmol) de cyclame et 16 g (116 mmol) de carbonate de potassium dans 1 L de chloroforme. Le mélange réactionnel est maintenu sous agitation à température ambiante pendant 48 h. Après filtration sur célite et évaporation du solvant, le résidu est repris dans l'éther de pétrole. Le cyclame en excès est filtré, le filtrat est concentré et on obtient ainsi du (1,4,8,11-tétraazacyclotétradec-1-yl)éthanoate d'éthyle (composé dit **5.0**), sous la forme de 11,21 g d'une huile légèrement jaune (rendement = 98 %) qui est utilisée sans purification.

Les trois amines secondaires du monoester **5.0** obtenu sont ensuite fonctionnalisées à l'aide du 2-chloro-*N*,*N*-diméthylacétamide (ce réactif chloré est préféré à son analogue bromé qui conduit à la formation d'une quantité significative de produits quaternisés). Pour ce faire, on dissout dans 100 mL d'acétonitrile les 11,21 g (soit 39,2 mmol) de composé **5.0** précédemment obtenu et on ajoute cette solution goutte à goutte dans une solution de 14,28 g (117 mmol) de 2-chloro-*N*,*N*-diméthylacétamide et 35 g (252 mmol) de carbonate de potassium dans 900 mL d'acétonitrile portée à 30 °C. Le mélange réactionnel est maintenu à 45 °C sous agitation pendant 48 h.

Après filtration sur célite et évaporation du solvant, le composé **5.1** est obtenu sous la forme de 20,2 g d'un solide légèrement jaune (rendement = 95 %), ayant les caractéristiques suivantes :
RMN ¹H (500 MHz, CDCl₃) : 1,21 (t, 3H, OCH₂CH₃) ; 1,57 (m, 4H, CH₂CH₂CH₂) ; 2,50-2,63 (m, 16H, CH₂N) ; 2,88 (s, 9H, NCH₃) ; 3,04 (s, 3H, NCH₃) ; 3,07 (s, 3H, NCH₃) ; 3,10 (s, 3H, NCH₃) ; 3,23-3,27 (m, 8H, CH₂CONH₂ et CH₂CO₂Et) ; 4,09 (q, 2H, OCH₂CH₃).
RMN ¹³C (125 MHz, CDCl₃) : 14,9 (OCH₂CH₃) ; 25,2 (CH₂CH₂CH₂) ; 25,4 (CH₂CH₂CH₂) ; 36,1-38,1 (NCH₃) ; 51,1-52,5 (CH₂N) ; 56,0 (CH₂CO₂Et) ; 57,8 (CH₂CONH₂) ; 58,1 (CH₂CONH₂) ; 58,4 (CH₂CONH₂) ; 60,8 (OCH₂CH₃) ; 171,3 (CO₂Et) ; 171,5 (CONMe₂) ; 171,6 (CONMe₂) ; 172,0 (CONMe₂).
Spectrométrie de masse (MALDI-TOF) *m*/*z* : 541,8 [L]⁺.
Analyse élémentaire : C 57,93 ; H 9,70 ; N 17,93 (A titre indicatif, les données calculées pour C₂₆H₅₁N₇O₅ (*M* = 541,40) sont les suivanets : C 57,65 ; H 9,49 ; N 18,10).

### ▪ Préparation du précurseur 5.2

### (précurseur macrocyclique porteurs d'une amine primaire)

On chauffe à reflux pendant 48 h une solution de 12,09 g (22,33 mmol) de composé **5.1** et 240 mL (43 mol) d'éthylènediamine dans 900 mL d'éthanol.

Après évaporation du solvant et de l'excès d'éthylènediamine, on obtient le composé **5.2** sous forme de 11,50 g d'un solide légèrement jaune (rendement : 93 %), ayant les caractéristiques suivantes :
RMN (500 MHz, CDCl₃) : 1,39 (m, 4H, CH₂CH₂CH₂) ; 2,27-2,52 (m, 20H, CH₂N) ; 2,59 (s, 9H, NCH₃) ; 2,71 (s, 3H, NCH₃) ; 2,76 (s, 3H, NCH₃) ; 2,82 (s, 3H, NCH₃) ; 2,96-3,01 (m, 8H, CH₂CO) ; 7,66 (t, 1H, CONHCH₂).
RMN ¹³C (125 MHz, CDCl₃) : 24,5 (CH₂CH₂CH₂) ; 25,0 (CH₂CH₂CH₂) ; 35,3-37,1 (NCH₃) ; 41,7 (CH₂N) ; 41,9 (CH₂N) ; 50,6-52,0 (CH₂N) ; 56,0 (CH₂CO) ; 56,7 (CH₂CO) ; 57,4 (CH₂CO) ; 58,4 (CH₂CO) ; 170,1 (CO) ; 170,4 (CO) ; 170,6 (CO) ; 172,2 (CO).
Spectrométrie de masse (MALDI-TOF) *m*/*z* : 556,2 [L+H]⁺.

### ▪ Greffage du précurseur 5.2 sur le gel SiCl (substitution nucléophile)

Le greffage est effectué en mettant en contact 10,27 g (18,5 mmol) de composé **5.2** avec 60 g de silice modifiée **SiCl** et 6,9 g (50 mmol) de carbonate de potassium dissous dans 400 mL d'acétonitrile. Le milieu est maintenu à reflux sous agitation mécanique pendant 48 h. Après retour à la température ambiante, filtration, séchage et tamisage, on obtient 65 g d'un matériau **Si2323ENTAMMe₂** ayant les caractéristiques ci-après :
RPE (gel métallé au cuivre, T = 100 K) : *g*⊥ = 2,07 ; *g_{∥}* = 2,23 ; *a_{∥}* = 156x10⁻⁴ cm⁻¹.
Analyse élémentaire de l'élément azote : 0,18 mmol g⁻¹ (% N : 2,02 %).
Fluorescence X du cuivre : 0,10 mmol g⁻¹.
Surface spécifique (BET) : 356 m² g⁻¹.
Volume total d'azote adsorbé : 0,74 cm³ g⁻¹.
Diamètre moyen des pores (BJH) : 83 Ǻ (distribution 30-160 Ǻ).

### Exemple 6 : Préparation du matériau Si2323CTAMMe₂

### (greffage impliquant une substitution nucléophile)

Dans cet exemple, un matériau de formule Si2323CTAMMe₂ tel que défini plus-haut dans la présente description a été préparé, selon le schéma réactionnel ci-après :

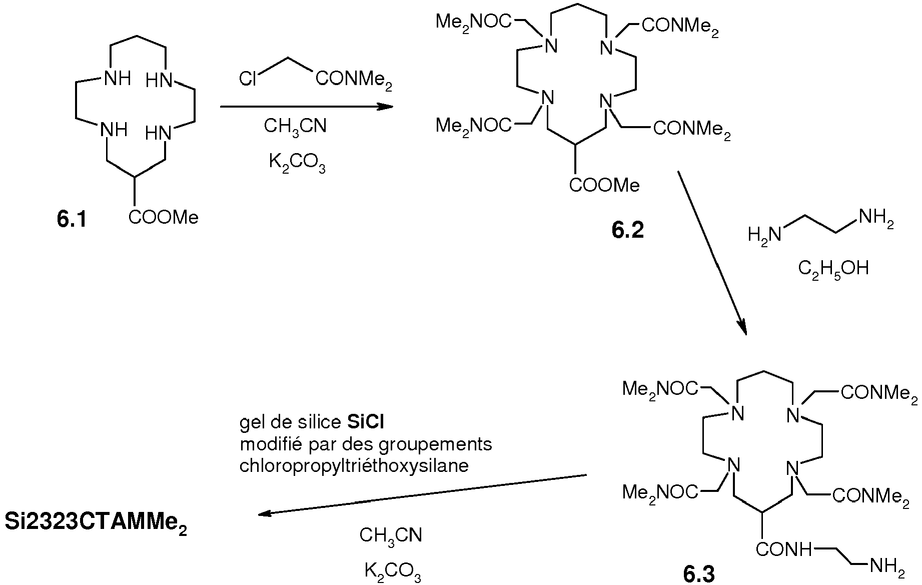

### ▪ Préparation du composé 6.2

La synthèse du précurseur **6.2** procède au départ de l'ester méthylique **6.1** (1,4,8,11-tétraazacyclotétradécane-6-carboxylate de méthyle) dont la synthèse a été décrite dans la demande WO 03/029228. A 20,53 g (148,0 mmol) de carbonate de potassium et 5,00 g (12,38 mmol) du composé **6.1•**4HCl dissous dans 500 mL d'acétonitrile porté à reflux, sont additionnés, en une portion unique, 6,02 g (12,38 mmol) de 2-chloro-N,N-diméthylacétamide, puis le mélange est agité à reflux pendant 5 j. Après filtration sur célite et évaporation du solvant, on obtient une huile jaune, qui est purifiée par chromatographie sur colonne d'alumine (éluant : dichlorométhane puis dichlorométhane/méthanol 2:98 v/v). La fraction de tête correspond au composé **6.2** qui est isolé sous la forme de 3,70 g d'une huile incolore après évaporation du solvant sous vide (rendement= 62 %), le composé obtenu ayant les caractéristiques suivantes :
RMN ¹H (500 MHz, CDCl₃) : 1,61 (m, 2H) ; 2,52-3,05 (m, 17H) ; 2,83 (s, 6H) ; 2,87 (s, 6H) ; 2,95 (s, 6H) ; 3,03 (s, 6H) ; 3,18 (d, 2H, ³*J* = 14,0 Hz) ; 3,29 (d, 2H, ³*J* = 14,0 Hz) ; 3,31 (s, 4H) ; 3,60 (s, 3H).
RMN ¹³C (125 MHz, CDCl₃) : 25,2 (CH₂CH₂CH₂) ; 36,0 (NCH₃) ; 36,1 (NCH₃) ; 37,5 (NCH₃) ; 37,6 (NCH₃) ; 45,2 (CHCO₂Me) ; 51,4 (CH₂N) ; 51,6 (CH₂N) ; 52,2 (CH₂N) ; 52,3 (CO₂CH₃) ; 55,9 (CH₂N) ; 58,3 (CH₂CO) ; 58,4 (CH₂CO) ; 171,1 (CONMe₂) ; 171,2 (CONMe₂) ; 176,0 (CO₂Me).
Spectrométrie de masse (MALDITOF) *m*/*z :* 599,2 [M]^{+·}.

### ▪ Préparation du précurseur 6.3

### (précurseur macrocyclique porteurs d'une amine primaire)

Une solution contenant 28,0 g (46,76 mmol) du monoester **6.2** précédemment préparé et 562,0 g (9,36 mol) d'éthylènediamine dissous dans 1 L d'éthanol est chauffée à 60 °C pendant 48 h. Après évaporation du solvant et de l'éthylènediamine en excès, le composé **6.3** est isolé quantitativement et est utilisé sans purification ultérieure dans l'étape suivante.

### ▪ Greffage du précurseur 6.3 sur le gel SiCl (substitution nucléophile)

On chauffe à reflux pendant 72 h un mélange constitué de 19,00 g (30,0 mmol) du composé **6.3,** 12,40 g (90,0 mmol) de carbonate de potassium et 60,00 g de gel de silice modifié **SiCl** dans 400 mL d'acétonitrile. Après filtration et lavages à l'eau, à l'éthanol et au chloroforme, puis séchage on obtient 64,1 g d'un matériau **Si2323CTAMMe₂** ayant les caractéristiques suivantes :
Analyse élémentaire de l'élément azote : 0,10 mmol g⁻¹ (% N : 1,12 %).
Fluorescence X du cuivre : 0,11 mmol g⁻¹.

### Exemple 7 : Préparation du matériau Si2323TAM

### (greffage impliquant une hydrosilylation catalytique)

Dans cet exemple 7 et les exemples 8 et 9 qui suivent, on a préparé un matériau selon l'invention en faisant réagir un précurseur porteur d'une terminaison vinyle avec un gel de silice traité par du triéthoxysilane. Ce gel de silice, qui sera désigné ci-après par **"SiH",** a été préparé en suivant le protocole décrit par Chu et al. dans Anal. Chem., vol. 65, pp. 808-816 (1993). Plus précisément, 5 g de silice déshydratée par distillation azéotropique (Kieselgel 60 - Merck ; fraction granulométrique = 0,25-0,40 mm ; surface spécifique = 550 m² g⁻¹) sont mis en suspension dans 100 mL de dioxane contenant également 1,6 mL d'une solution d'acide chlorhydrique à 35 %. Le mélange est agité mécaniquement et chauffé à 75 °C avant d'introduire sur une durée de 15 min 3,7 g (22,5 mmol) de triéthoxysilane dilués dans 45 mL de dioxane. Le chauffage est maintenu pendant 1 h avant de filtrer le mélange et sécher le gel. Le gel modifié **SiH** obtenu a les caractéristiques suivantes :
IR (réflexion diffuse, KBr, cm⁻¹) : 2250 (v_{SiH}).

Dans le présent exemple 7, on a greffé un précurseur **7.2** de formule suivante :

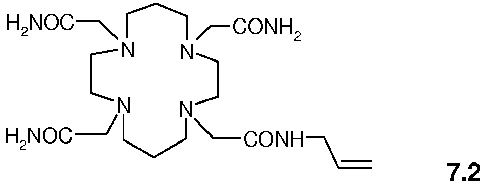

### sur le gel SiH.

Ce composé **7.2** a été obtenu au départ d'un précurseur 7.1, selon le protocole suivant :

### ▪ Préparation du précurseur 7.1

Sous atmosphère d'azote, 10,6 mL (133 mmol) de chlorure de chloroacétyle et 30 g (266 mmol) de carbonate de potassium sont mélangés dans 500 mL de dichlorométhane. Le mélange est refroidi à 0 °C.

On ajoute ensuite 20 mL (133 mmol) d'allylamine dissous dans 50 mL de dichlorométhane. L'addition est effectuée sur une durée de 15 minutes au moyen d'une ampoule à brome isobare. L'agitation est maintenue à température ambiante pendant 18 h puis le mélange est filtré sur célite. Par évaporation du solvant, on obtient le composé **7.1** sous la forme de 16,3 g d'une huile jaune pâle (rendement = 92 %), ayant les caractéristiques suivantes :
RMN ¹H (200 MHz, CDCl₃) : 3,87 (t, 2H, ³*J* = 5,7 Hz, CONHCH₂) ; 4,03 (s, 2H, CH₂Cl) ; 5,09 (d, 1H, ³*J*_{cis} = 12 Hz, CH=CH₂) ; 5,13 (d, 1H, ³*J*ₜᵣₐₙₛ = 17 Hz, CH=CH₂) ; 5,80 (ddt, 1H, ³*J* = 5,7 Hz, ³*J*_{cis} = 12 HZ, ³*J*ₜᵣₐₙₛ = 17 HZ, CH=CH₂) ; 6,87 (s large, 1H, CONH) .
RMN ¹³C (50 MHz, CDCl₃) : 42,4 (NHCH₂) ; 42,8 (ClCH₂) ; 117,2 (CH=CH₂) ; 133,3 (CH=CH₂) ; 166,6 (CO).

### ▪ Préparation du composé 7.2

Le précurseur vinylique **7.2** est synthétisé à partir du composé **1.1** préparé dans l'exemple 1 (à savoir le composé trisubstitué TE3AM•HI). Plus précisément, on dissout 10 g (20 mmol) du composé **1.1** dans 100 mL d'eau, et on porte la solution à ébullition. On ajoute alors au milieu à ébullition 2,67 g (20 mmol) du composé **7.1,** en une seule portion, en maintenant le pH du milieu supérieur à 12 par ajout d'hydroxyde de benzyltriméthylammonium (en solution à 40 % en masse dans l'eau). Le chauffage est maintenu pendant 2 h dans ces conditions, puis le solvant est éliminé par évaporation sous vide, ce par quoi on obtient un résidu jaune huileux. Une addition de 100 mL d'acétone et de 20 mL d'éthanol à ce résidu conduit à la précipitation d'un solide blanc qui est isolé, lavé par 100 mL d'acétone et 100 mL d'éther puis séché sous vide, ce par quoi on obtient 5,5 g du composé **7.2** recherché (rendement = 59 %), ayant les caractéristiques ci-après :
RMN ¹H (200 MHz, D₂O + DCl, pD < 1) : 2,10 (m, 4H, CH₂CH₂CH₂) ; 3,38 (m, 8H, CH₂N) ; 3,64-3,71 (m, 10H, CH₂N + CONHCH₂) ; 4,02 (s large, 8H, CH₂CO) ; 5,00 (m, 1H, CH=CH₂) ; 5,03 (m, 1H, CH=CH₂) ; 5,64 (m, 1 H, CH=CH₂).
RMN ¹³C (50 MHz, D₂O + DCI, pD < 1) : 18,58 (CH₂CH₂CH₂) ; 42,34 (CONHCH₂) ; 46,38 (CH₂N) ; 50,17 (CH₂N) ; 56,80 (CH₂CONH₂) ; 57,08 (CH₂CONH) ; 116,75 (CH=CH₂) ; 133,38 (CH=CH₂) ; 164,92 (CONH) ; 167,35 (CONH₂).
IR (KBr, cm⁻¹) : 3392 (v_{NH}) ; 2925 (v_{CH}) ; 2879 (v_{CH}) ; 2827 (v_{CH}) ; 1679 (v_{CO}) ; 1597 (v_{C=C}) ; 1384 (V_{CN}) ; 1159 (V_{CN}) ; 1060 (δ_{CH allyl}) ; 623 (ω_{NH}).
Spectrométrie de masse (MALDI-TOF) *m*/*z* : 468,9 [L + H]⁺ ; 490,7 [L + Na]⁺ ; 506,2 [L + K]⁺.

### ▪ Greffage du précurseur 7.2 sur gel de silice SiH

On mélange par agitation mécanique 1 g de gel SiH et 1 mmol de composé **7.2** dans 50 mL d'éthanol contenant 2 % molaire d'un catalyseur d'hydrosilylation (acide hexachloroplatinique hydraté à 40 % en Pt). Le milieu réactionnel est porté à 80 °C pendant 48 h. Le matériau est ensuite récupéré par filtration, lavé à l'éthanol, à l'eau puis à l'acétone, avant d'être séché sous vide. Il possède les caractéristiques suivantes :
IR (réflexion diffuse, KBr, cm⁻¹) : 3300 (v_{NH}) ; 2977 (v_{CH}) ; 2820 (v_{CH}) ; 1665 (v_{CO}) ; 1092 (v_{SiO}) ; 792 (δ_{OSiO}).
Analyse élémentaire de l'élément azote : 0,11 mmol g⁻¹ (% N : 1,28 %).

### Remarques :

Le mode de greffage décrit ici est purement indicatif et peut être modifié en une assez large mesure. On peut par exemple employer un autre solvant que l'éthanol (2-propanol ou acétonitrile notamment) et/ou utiliser un autre catalyseur d'hydrosilylation, comme par exemple un catalyseur de Wilkinson.

Par ailleurs, on peut alternativement employer un greffage in-situ des précurseurs sur un gel de silice non modifié, en inversant l'ordre d'addition du triéthoxysilane. Dans ce cas le précurseur vinylique ou styrénique est d'abord silylé par voie catalytique à l'aide d'un agent tel que l'acide hexachloroplatinique hydraté (40 % en Pt) ou le réactif de Wilkinson, puis le réactif obtenu est condensé in-situ sur les fonctions silanol d'un gel de silice déshydraté non modifié.

Ces remarques sont valables pour les greffages décrits dans les exemples 8 et 9 qui suivent.

### Exemple 8 : Préparation du matériau Si2323TAMMe₂

### (greffage impliquant une hydrosilylation catalytique)

Dans cet exemple, on a greffé un précurseur **8.2** de formule suivante : 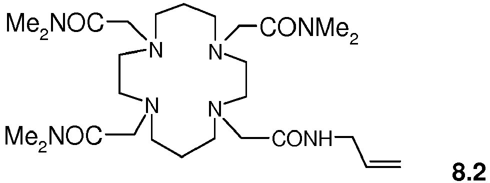 sur le gel SiH précité.

Ce composé **8.2** a été obtenu au départ d'un précurseur **8.1,** lui-même obtenu à partir du précurseur **7.1** de l'exemple 7 précédent, selon le protocole détaillé ci-après :

### ▪ Préparation du précurseur 8.1 à partir du précurseur 7.1

On a mélangé 5 g (25 mmol) de cyclame (1,4,8,11-tétraazacyclotétradécane), 830 mg (6,25 mmol) du composé **7.1** préparé dans l'exemple 7, et 2,6 g (18,75 mmol) de carbonate de potassium dans 100 mL de tétrahydrofurane, puis le mélange est porté au reflux pendant 16 h. Après évaporation du solvant sous vide, on obtient un résidu qu'on extrait par 3 x 100 mL de pentane. La phase organique obtenue est filtrée et le solvant évaporé, ce par quoi on obtient le produit **8.1** sous la forme de 1,65 g d'une huile blanche (rendement = 88 %), ayant les caractéristiques ci-après :
RMN ¹H (300 MHz, CDCl₃) : 1,65 (m, 4H, CH₂CH₂CH₂) ; 2,50-2,70 (m, 16 H, CH₂N) ; 3,02 (s, 2H, CH₂CO) ; 3,84 (m, 2H, CONHCH₂) ; 5,04 (d, 1H, ³*J*_{cis} = 10,0 Hz, CH=CH₂) ; 5,13 (d, 1H, ³*J*ₜᵣₐₙₛ = 17,0 Hz, CH=CH₂) ; 5,80 (ddt, 1H, ³*J* = 5,5 Hz, ³*J*_{cis} = 10,0 Hz, ³*J*ₜᵣₐₙₛ = 17,0 Hz ; CH=CH₂) ; 8,63 (s large, 1H, CONH).
RMN ¹³C (75 MHz, CDCl₃) : 26,88 (CH₂CH₂CH₂) ; 29,08 (CH₂CH₂CH₂) ; 41,93 (CONHCH2) ; 47,66 (CH₂N) ; 48,19 (CH₂N) ; 48,57 (CH₂N) ; 49,11 (CH₂N) ; 49,32 (CH₂N) ; 50,87 (CH₂N) ; 54,13 (CH₂N) ; 56,72 (CH₂N) ; 58,53 (CH₂N) ; 116,13 (CH=CH₂) ; 135,56 (CH=CH₂) ; 171,98 (CO).
Spectrométrie de masse (MALDI-TOF) *m*/*z* : 298,1 [L + H]⁺.

### ▪ Préparation du composé 8.2

Le composé **8.2** a été obtenu par trifonctionnalisation du précurseur macrocyclique **8.1.** Pour ce faire, on a fait réagir 2,7 g (9,09 mmol) de composé **8.1** avec 3,3 g (27,3 mmol) de 2-chloro-*N,N*-diméthylacétamide, en présence de 9 g (75 mmol) de carbonate de potassium, dans 350 mL d'acétonitrile porté à reflux. Après 48 h de réaction, le solvant est évaporé sous vide et le résidu extrait par 200 mL de chloroforme. Après élimination du solvant, on obtient une huile qu'on dilue dans 200 mL d'acétone. Par évaporation du solvant, on obtient 3,0 g du composé **8.2** recherché (rendement = 60 %), ayant les caractéristiques ci-après :
RMN ¹H (500 MHz, CDCl₃) : 1,79 (m, 4H, CH₂CH₂CH₂) ; 2,74-2,82 (m, 16H, CH₂N) ; 3,07-3,32 (m, 18H, NCH₃) ; 3,45 (m, 8H, CH₂CO) ; 4,04 (m, 2H, CONHCH₂) ; 5,27 (d, 1H, ³*J*_{cis} = 10,0 Hz, CH=CH₂) ; 5,33 (d, 1H, ³*J*ₜᵣₐₙₛ = 16,2 Hz, CH=CH₂) ; 6,00 (m, 1H, CH=CH₂) ; 8,19 (s, 1H, CONH).
RMN ¹³C (125 MHz, CDCl₃) : 25,34 (CH₂CH₂CH₂) ; 25,91 (CH₂CH₂CH₂) ; 35,67 (CONMe) ; 35,82 (CONMe) ; 36,03 (CONMe) ; 37,02 (CONMe) ; 37,32 (CONMe) ; 37,50 (CONMe) ; 42,03 (CONHCH₂) ; 50,91 (CH₂N) ; 51,37 (CH₂N) ; 51,87 (CH₂N) ; 52,08 (CH₂N) ; 52,50 (CH₂N) ; 52,63 (CH₂N) ; 53,10 (CH₂N) ; 53,40 (CH₂N) ; 55,80 (CH₂N) ; 57,19 (CH₂N) ; 57,90 (CH₂N) ; 116,60 (CH=CH₂) ; 135,08 (CH=CH₂) ; 170,52 (CONMe₂) ; 170,85 (CONMe₂) ; 171,10 (CONMe₂) ; 172,27 (CONH).
IR (KBr, cm⁻¹) : 3434 (v_{NH}) ; 2941 (v_{CH}) ; 2797 (v_{CH}) ; 1643 (v_{CO}) ; 1412 (V_{CN}) ; 1119 (v_{CN}).
Spectrométrie de masse (MALDI-TOF) *m*/*z :* 553,3 [L + H]⁺ ; 575,0 [L + Na]⁺.
Analyse élémentaire : C 57,93 ; H 9,62 ; N 19,67 (pour information, les valeurs calculées pour C₂₇H₅₂N₈O₄ (*M*= 552,75) sont C 58,67 ; H 9,48 ; N 20,27).

### ▪ Greffage du précurseur 8.2 sur gel de silice SiH

On mélange par agitation mécanique 1 g de gel SiH et 1 mmol de composé **8.2** dans 50 mL d'éthanol contenant 2 % molaire d'un catalyseur d'hydrosilylation (acide hexachloroplatinique hydraté à 40 % en Pt). Le milieu réactionnel est porté à 80 °C pendant 48 h. Le matériau est ensuite récupéré par filtration, lavé à l'éthanol, à l'eau puis à l'acétone, avant d'être séché sous vide. Le matériau **Si2323TAMMe₂** obtenu possède les caractéristiques suivantes :
Analyse élémentaire de l'élément azote : 0,08 mmol g⁻¹ (% N : 0,89 %).

### Exemple 9 : Préparation du matériau Si2323TAMvinyl

### (greffage impliquant une hydrosilylation catalytique)

Dans cet exemple, on a greffé un précurseur **9.2** de formule suivante : 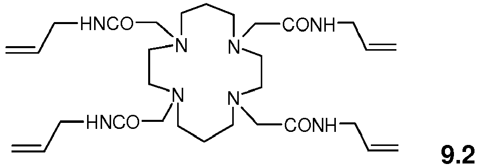 sur le gel SiH précité.

Le composé **9.2** a été obtenu au départ du précurseur **7.1** de l'exemple 7 précédent, selon le protocole ci-après :

### ▪ Préparation du précurseur 9.2 à partir du précurseur 7.1

A une solution de 5 g (25 mmol) de cyclame (1,4,8,11-tétraazacyclotétradécane) dissous dans 50 mL d'eau chauffée à 80 °C et maintenue sous agitation, on ajoute en une seule fois 16,6 g (125 mmol) du composé **7.1** de l'exemple 7. Le milieu réactionnel est laissé à 80 °C pendant 15 minutes tout en maintenant le pH du milieu à une valeur supérieure à 12 par ajout de pastilles de KOH. Le milieu est ensuite laissé sous agitation sans chauffage pendant 30 minutes supplémentaires. Le composé 9.2 formé est extrait du milieu réactionnel par extraction par 3 x 50 mL de chloroforme. Les fractions sont rassemblées, la phase organique est séchée, le solvant évaporé sous vide, puis le résidu jaune obtenu est recristallisé dans l'acétone, ce par quoi on obtient le composé **9.2** sous la forme de 4,07 g de fines aiguilles transparentes (rendement = 28 %), ayant les caractéristiques ci-après :
RMN ¹H (500 MHz, CDCl₃) : 1,64 (p, 4H, ³*J* = 6,7 Hz, CH₂CH₂CH₂) ; 2,52 (t, 8H, ³*J* = 6,7 Hz, CH₂CH₂CH₂N) ; 2,58 (s, 8H, CH₂CH₂N) ; 3,01 (s, 8H, CH₂CO) ; 3,83 (t, 8H, ³*J* = 6,0 Hz, CONHCH₂) ; 5,11 (d, 4H, ³*J*_{cis} = 10,0 Hz, CH=CH₂ ) ; 5,17 (d, 4H, ³*J*ₜᵣₐₙₛ = 17,0 Hz, CH=CH₂) ; 5,80 (ddt, 4H, ³*J* = 6,0 Hz, ³*J*_{cis} = 10,0 Hz, ³*J*ₜᵣₐₙₛ = 17,0 Hz, CH=CH₂) ; 7,10 (t, 4H, ³*J* = 6,0 Hz, CONH).
RMN ¹³C (125 MHz, CDCl₃) : 25,46 (CH₂CH₂CH₂) ; 42,05 (CONHCH₂) ; 51,21 (CH₂N) ; 52,63 (CH₂N) ; 58,61 (CH₂CO) ; 117,59 (CH=CH₂) ; 134,48 (CH=CH₂) ; 170,87 (CONH).
IR (KBr, cm⁻¹) : 3283 (v_{NH}) ; 3062 (v_{CH allyl}) ; 2980 (v_{CH}) ; 2951 (v_{CH}) ; 2925 (v_{CH}) ; 2830 (v_{CH}) ; 1649 (v_{CO}) ; 1551 (v_{C=C}) ; 1260 (V_{CN}) ; 996 (δ_{CH allyl}) ; 929 (δ_{CH allyl}) ; 709 (ω_{NH}).
Spectrométrie de masse (MALDI-TOF) *m*/*z* : 589,3 [L + H]⁺ ; 610,8 [L + Na]⁺ ; 626,7 [L + K]⁺.

### ▪ Greffage du précurseur 9.2 sur gel de silice SiH

On mélange par agitation mécanique 1 g de gel SiH et 1 mmol de composé **9.2** dans 50 mL d'éthanol contenant 2 % molaire d'un catalyseur d'hydrosilylation (acide hexachloroplatinique hydraté à 40 % en Pt). Le milieu réactionnel est porté à 80° C pendant 48 h. Le matériau est ensuite récupéré par filtration, lavé à l'éthanol, à l'eau puis à l'acétone avant d'être séché sous vide. Le matériau **Si2323TAMvinyl** obtenu possède les caractéristiques suivantes :
IR (réflexion diffuse, KBr, cm⁻¹) : 3733 (v_{SiOH}) ; 3700-3200 (v_{OH} + v_{NH}) ; 3080 (v_{CH allyl}) ; 2982 (v_{CH}) ; 2938 (v_{CH}) ; 2891 (v_{CH}) ; 1656 (v_{CO}) ; 1534 (δ_{CNH}) ; 1090 (v_{SiO}) ; 803 (δ_{OSiO}).
Analyse élémentaire de l'élément azote : 0,21 mmol g⁻¹ (% N : 2,31 %).

### Exemple 10 : Exemple d'application du matériau Si2323TAM Purification d'une eau de type eau potable contaminée par du plomb

### (colonne de chromatographie)

Dans cet exemple, on a mis en évidence les propriétés extractantes du matériau **Si2323TAM** tel que préparé dans l'exemple 1, vis-à-vis de différents cations présents dans une eau potable contaminée artificiellement par des cations Pb²⁺.

L'eau contaminée utilisée pour le test est une eau potable ayant les caractéristiques physico-chimique suivantes :

| | |
|---|---|
| Température: | 17,6 °C |
| pH à 25 °C : | 7,7 |
| Titre alcalimétrique : | 0 °F |
| Titre alcalimétrique complet : | 23 °F (soit 4,6 meq/L) |
| Titre hydrométrique : | 28,0 °F (soit 134 meq/L) |
| Concentration en plomb | 710 microgrammes par litre |
| Concentration en cuivre | 160 microgrammes par litre |
| Concentration en zinc | 550 microgrammes par litre |
| Concentration en magnésium | 3,9 milligrammes par litre. |
| Concentration en calcium | 95,0 milligrammes par litre. |
| Concentration en strontium | 136 microgrammes par litre |
| Concentration en barium | 17 microgrammes par litre. |

L'eau a été contaminée par dissolution de nitrate de plomb à saturation puis filtrée, ce par quoi on a obtenu une teneur initiale en cations Pb²⁺ de 710 microgrammes par litre.

L'eau ainsi contaminée a été percolée dans un lit contenant 50 g du matériau extractant **Si2323TAM** contenu dans une colonne chromatographique de diamètre égal à 2,5 cm, à l'aide d'une pompe péristaltique ayant un débit de 1 L/h.

Des prises d'essais de 10 mL ont été régulièrement prélevées en sortie de colonne. Chaque prise d'essai a été acidifiée à 2 % par de l'acide nitrique ultra pur, puis analysé par spectrométrie d'émission atomique par plasma à couplage inductif (ICP-AES).

L'évolution de la concentration des différents éléments Pb, Cu, Zn, Mg, Ca, Sr, Ba est reportée dans le tableau 1 ci-dessous, où :
- V désigne le volume cumulé des échantillons prélevés (en litre) ;
- [Pb], [Cu], [Zn], [Mg], [Ca], [Sr], et [Ba] désignent les concentrations des éléments respectifs (en microgramme par litre sauf pour Mg et Ca où elles sont exprimées en milligrammes par litre).

**Tableau 1**

| **Concentration en cations en sortie de la colonne** | | | | | | | |
|---|---|---|---|---|---|---|---|
| V (L) | [Pb] (µg L⁻¹) | [Cu] (µg L⁻¹) | [Zn] (µg L⁻¹) | [Mg] (mg L⁻¹) | [Ca] (mg L⁻¹) | [Sr] (µg L⁻¹) | [Ba] (µg L⁻¹) |
| 0,1 | 1,9 | 0,9 | 0,3 | 3,7 | 88,0 | 142,4 | 24,1 |
| 0,2 | 1,2 | 0,8 | 0,2 | 3,9 | 94,0 | 138,0 | 17,8 |
| 0,3 | 0,6 | 0,9 | 0,1 | 3,9 | 95,0 | 138,5 | 17,4 |
| 0,4 | 1,3 | 1,1 | 0,3 | 3,9 | 95,0 | 136,8 | 17,2 |
| 0,5 | 1,2 | 0,9 | 0,1 | 3,9 | 96,0 | 138,4 | 17,3 |
| 0,6 | 0,6 | 1,0 | 0,3 | 3,9 | 97,0 | 138,6 | 17,3 |
| 0,7 | 1,9 | 1,1 | 0,2 | 3,9 | 97,0 | 138,5 | 17,3 |
| 0,8 | 0,8 | 1,1 | 0,6 | 3,9 | 97,0 | 138,7 | 17,4 |
| 0,9 | 1,6 | 1,0 | 0,4 | 3,9 | 97,0 | 138,4 | 17,3 |
| 1,0 | 0,6 | 1,1 | 0,5 | 3,9 | 98,0 | 139,5 | 17,4 |
| 1,1 | 2,2 | 1,1 | 0,7 | 3,9 | 98,0 | 140,4 | 17,5 |
| 1,2 | 0,5 | 1,1 | 0,5 | 3,9 | 98,0 | 139,2 | 17,3 |
| 1,3 | 1,8 | 1,1 | 0,4 | 3,9 | 97,0 | 137,6 | 17,1 |
| 1,4 | 0,2 | 1,2 | 0,2 | 3,9 | 97,0 | 137,6 | 17,1 |
| 1,5 | 1,3 | 1,1 | 0,6 | 3,9 | 97,0 | 137,3 | 17,0 |
| 1,6 | 1,3 | 1,2 | 0,6 | 3,9 | 97,0 | 137,5 | 17,1 |
| 1,7 | 2,4 | 1,3 | 0,5 | 3,9 | 97,0 | 136,9 | 17,0 |
| 1,8 | 0,9 | 1,3 | 0,6 | 3,9 | 97,0 | 137,0 | 17,0 |
| 1,9 | 1,0 | 1,3 | 0,5 | 3,9 | 97,0 | 137,3 | 17,1 |
| 2,0 | 1,8 | 1,3 | 0,6 | 3,9 | 97,0 | 138,0 | 17,1 |
| 2,1 | 0,3 | 1,5 | 0,6 | 3,9 | 97,0 | 137,0 | 17,0 |
| 2,2 | 1,4 | 1,4 | 0,5 | 3,9 | 98,0 | 137,9 | 17,1 |
| 2,3 | 0,3 | 1,4 | 0,7 | 3,9 | 98,0 | 137,2 | 17,1 |
| 2,4 | 1,8 | 1,3 | 0,7 | 3,9 | 98,0 | 138,5 | 17,1 |
| 2,5 | 0,4 | 1,4 | 0,9 | 3,9 | 97,0 | 136,0 | 17,0 |
| 2,6 | 2,3 | 1,6 | 0,7 | 3,9 | 98,0 | 137,0 | 17,0 |
| 2,7 | 1,1 | 1,7 | 0,9 | 3,9 | 97,0 | 136,3 | 17,0 |
| 2,8 | 1,5 | 1,4 | 0,8 | 3,9 | 98,0 | 137,6 | 17,1 |
| 2,9 | 0,3 | 1,6 | 0,9 | 3,9 | 97,0 | 137,2 | 17,1 |
| 3,0 | 2,2 | 1,6 | 0,9 | 3,9 | 98,0 | 137,6 | 17,2 |
| 3,1 | 0,4 | 1,6 | 0,9 | 3,9 | 98,0 | 137,4 | 17,0 |
| 3,2 | 3,1 | 1,8 | 0,8 | 3,9 | 98,0 | 137,4 | 17,1 |
| 3,3 | 2,0 | 1,8 | 0,9 | 3,9 | 97,0 | 136,1 | 17,0 |
| 3,4 | 2,0 | 1,6 | 1,0 | 3,9 | 98,0 | 136,4 | 17,1 |
| 3,5 | 0,5 | 1,7 | 0,8 | 3,9 | 98,0 | 137,4 | 17,1 |
| 3,6 | 2,1 | 1,8 | 1,0 | 3,9 | 98,0 | 136,9 | 17,0 |
| 3,7 | 1,9 | 1,7 | 1,2 | 3,9 | 98,0 | 137,2 | 17,0 |
| 3,8 | 1,0 | 2,1 | 1,5 | 3,9 | 97,0 | 136,3 | 17,1 |
| 3,9 | 1,0 | 1,9 | 1,0 | 3,9 | 98,0 | 137,7 | 17,3 |
| 4,0 | 1,9 | 1,9 | 1,0 | 3,7 | 94,0 | 131,4 | 16,5 |
| 4,1 | 1,4 | 1,5 | 0,7 | 3,7 | 94,0 | 132,1 | 16,6 |
| 4,2 | 1,6 | 6,8 | 3,8 | 3,7 | 93,0 | 131,2 | 16,4 |
| 4,3 | 1,3 | 1,9 | 1,3 | 3,7 | 94,0 | 132,5 | 16,5 |
| 4,4 | 1,6 | 2,1 | 1,0 | 3,7 | 93,0 | 132,2 | 16,4 |

Les résultats observés mettent en évidence une excellente sélectivité du matériau, qui ne fixe pas les métaux alcalino-terreux mais retient de façon efficace le plomb, le cuivre, et le zinc.

### Exemple 11 : Exemple d'application du matériau Si2323ENTAM Purification d'une eau de type eau potable contaminée par du plomb

### (cartouche filtrante)

Dans cet exemple, le matériau **Si2323ENTAM** tel que préparé dans l'exemple 4 a été utilisé dans une cartouche filtrante du type décrit par exemple dans le brevet JP 02 301469, qui se fixe au robinet de sortie d'un évier.

Plus précisément, la cartouche, de forme cylindrique (diamètre externe : 6 cm ; diamètre interne : 5,5 cm, longueur : 9 cm) comprend :
- une partie centrale (diamètre : 2,5 cm) constituée d'un faisceau de fibres creuses développant une surface d'environ 0,1 m² ; et
- une partie annulaire creuse autour de cette partie centrale, d'un volume de 110 mL. Cette partie annulaire est destinée à recevoir un matériau extractant, et elle est remplie dans le présent exemple par le matériau **Si2323ENTAM.**

La cartouche est munie d'une entrée latérale de l'eau à traiter à la base de la partie annulaire et d'une sortie de l'eau traitée à la base du faisceau de fibres creuses de la partie centrale. Par ailleurs, la partie haute de la partie annulaire et la partie haute de la partie centrale sont en connexion fluide. Ainsi, l'eau qui pénètre dans la cartouche lorsqu'on ouvre le robinet remplit la partie annulaire (l'entrée de l'eau par la base améliore la distribution du fluide dans la partie annulaire et diminue la probabilité d'écoulement à travers des chemins préférentiels creusés dans le lit du matériau), puis, arrivée en partie haute de la partie annulaire, l'eau passe dans la partie centrale et s'écoule à travers le faisceau de fibres creuses pour atteindre la sortie de la cartouche.

Dans le présent exemple, on a effectué plusieurs tests dans lesquels une eau contaminée en plomb obtenue en laissant stagner pendant 30 minutes de l'eau potable dans un tuyau de plomb d'un volume de 4,4 L relié d'un côté au réseau d'alimentation en eau potable et de l'autre à un robinet muni de la cartouche d'écrite précédemment.

Dans chacun des tests réalisés, on a d'abord effectué une purge complète du tuyau en laissant s'écouler 30 L d'eau. On a ensuite laissé stagner l'eau dans le tuyau, en fermant le robinet pendant 30 minutes. Après avoir effectué une purge de 250 mL en amont et en aval de la cartouche, et on a prélevé 2 L d'eau issue du tuyau. Le débit de l'eau sortant de la cartouche dans les essais réalisés est de 110 litre par heure.

Pour chacun des tests, l'échantillon de 2 L prélevé a été homogénéisé par agitation, puis on a prélevé un échatillon de 10 mL qu'on a acidifié à 2 % par de l'acide nitrique ultra pur, puis analysé par spectrométrie d'émission atomique par plasma à couplage inductif (ICP-AES).

Dans chaque cas, on a comparé la teneur en plomb mesurée dans l'eau issue du traitement par la cartouche filtrante avec celle de l'eau de premier jet collectée en amont de la cartouche lors de la purge initiale.

Les résultats sont reportés dans le tableau 2 ci-après, où [Pb]ᵢ désigne la concentration en plomb initiale, à savoir mesurée dans l'eau de premier jet et [Pb]_{f} la concentration en plomb finale, à savoir mesurée en sortie de cartouche. Les valeurs de ces concentrations sont données en microgrammes par litres.

**Tableau 2**

| **Diminution de la concentration en Pb par passage dans la cartouche filtrante** | | | | | | | | | | | |
|---|---|---|---|---|---|---|---|---|---|---|---|
| essai | 1 | 2 | 3 | 4 | 5 | 6 | 7 | 8 | 9 | 10 | 11 |
| [Pb]ᵢ | 53 | 78 | 73 | 65 | 77 | 647 | 61 | 511 | 541 | 518 | 53 |
| [Pb]_{f} | 9 | 7 | 5 | 6 | 6 | 6 | 7 | 3 | 4 | 4 | 5 |

Les résultats ci-dessus font bien ressortir l'efficacité du matériau **Si2323ENTAM** pour retenir les cations Pb²⁺, avec une teneur en plomb en sortie très faible, systématiquement inférieure à 10 microgrammes par litre.

## Revendications

1. Matériau adapté à l'extraction de cations métalliques en milieu aqueux, comprenant un support solide (S) sur lequel sont fixés de façon covalente des composés polyazacycloalcanes (PAC) ayant un cycle comportant 4 atomes d'azote, et où chacun des atomes d'azote du cycle est substitué par un groupe coordinant, chacun des groupes coordinants portés par les atomes d'azote du cycle d'un (PAC) fixé au support (S) étant, indépendamment des autres :
- un groupe coordinant Rc répondant à la formule générale suivante :
-(CH₂)ₙ-C(=O)-NR¹R²
où :
n = 1, 2 ou 3 ;
R¹ et R² sont identiques ou différents et chacun d'entre eux représente un atome d'hydrogène, ou un radical alkyle comprenant de 1 à 4 atomes de carbone, ou un radical alcényle comprenant de 1 à 4 atomes de carbone, ou un radical aryle ;
ou bien
- un groupe coordinant et liant RcL répondant à la formule générale ci-dessous :
-(CH₂)ₚ-C(=O)-NR³-(A)-,
où :
p = 1, 2 ou 3 ;
R³ représente un atome d'hydrogène, ou un radical alkyle comprenant de 1 à 4 atomes de carbone, ou un radical alcényle comprenant de 1 à 4 atomes de carbone, ou un radical aryle ;
-(A)- représente une chaîne hydrocarbonée, linéaire ou ramifiée, saturée ou insaturée, éventuellement cyclisée en tout ou partie et éventuellement interrompue par un ou plusieurs hétéroatomes, liée par au moins une liaison covalente au support solide (S)
ledit matériau répondant à l'une des formules ci-dessous 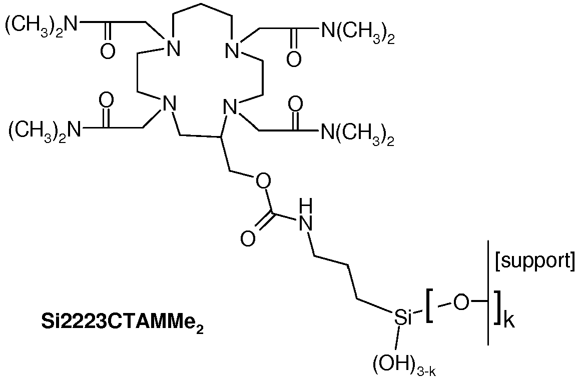 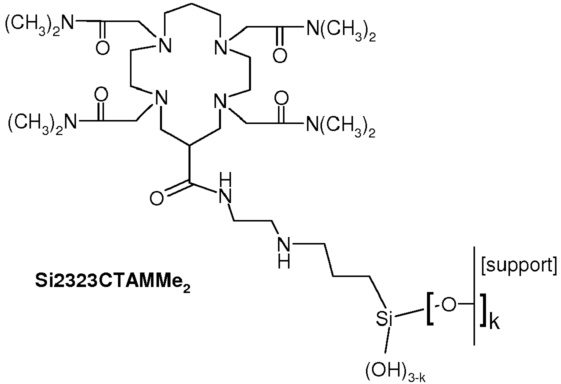
où k, qui représente le nombre de liaisons entre l'espèce cyclique et le support solide (S), est un entier égal à 1, 2 ou 3 ;
ou ledit matériau répondant à la formule (II) suivante : 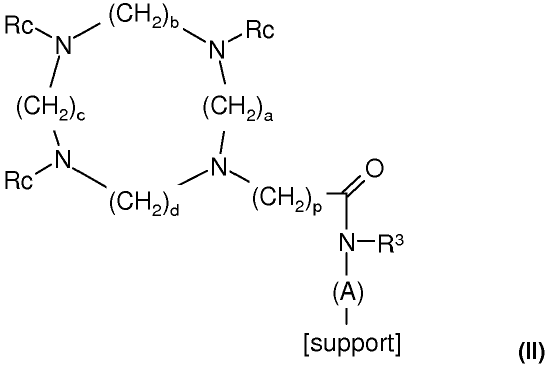
où :
a, b, c et d sont trois nombres entiers, identiques ou différents, chacun de a, b, c et d étant égal à 2 ou 3 ;
chacun des 3 groupes Rc, identiques ou différents représente un groupe répondant à la formule générale :
-(CH₂)ₙ-C(=O)-NR¹R²
telle que définie ci-dessus; et
p, R³ et -(A)- sont tels que définis ci-dessus.

2. Matériau selon la revendication 1, répondant à la formule (IIa) suivante : 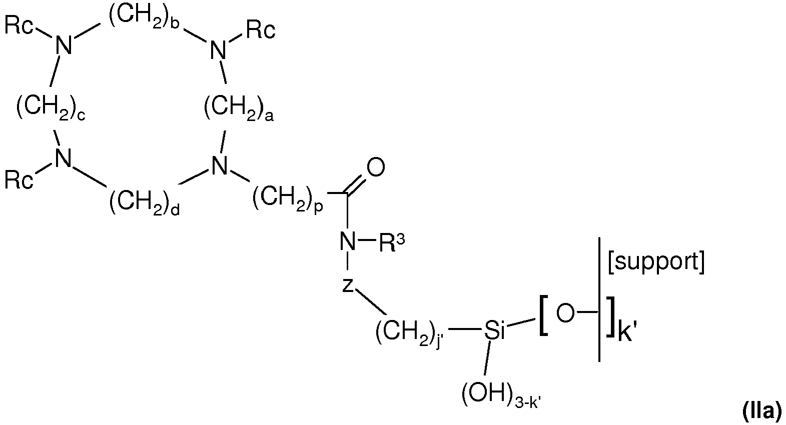 où :
a, b, c, d, p et les groupements Rc et R³ ont les significations données dans la revendication 1 ;
z est un groupe hydrocarboné divalent, linéaire ou ramifié, saturé ou insaturé, éventuellement cyclisé en tout ou partie et éventuellement interrompu par un ou plusieurs hétéroatomes ;
j' est un entier égal à 0, 1, 2 ou 3 ; et
k', qui représente le nombre de liaisons entre l'espèce cyclique et le support solide (S), est un entier égal à 1, 2 ou 3.

3. Matériau selon la revendication 2, où les composés polyazacycloalcanes (PAC) immobilisés sur le support solide (S) répondent à l'une des formules ci-dessous : 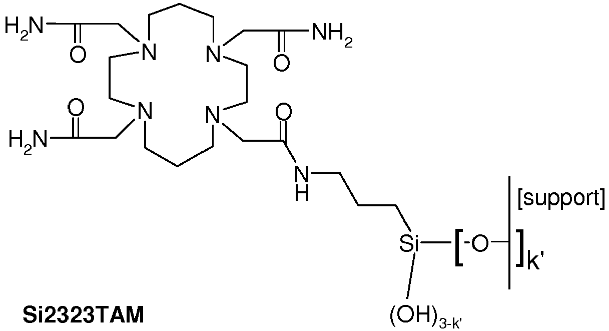 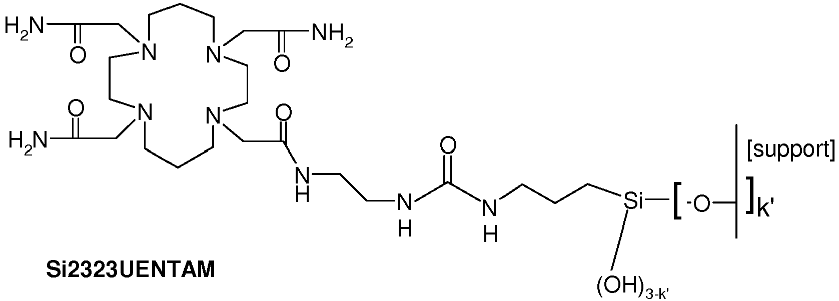 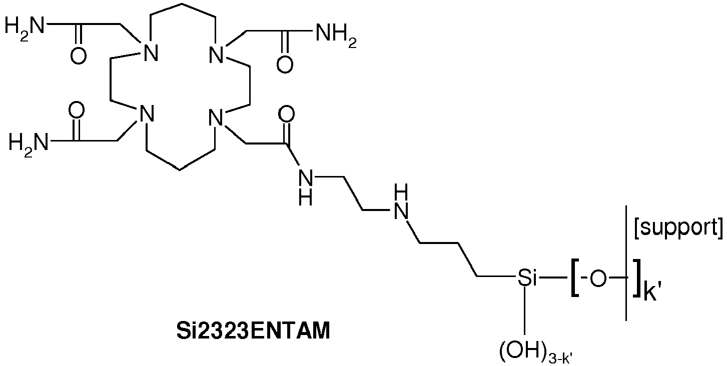 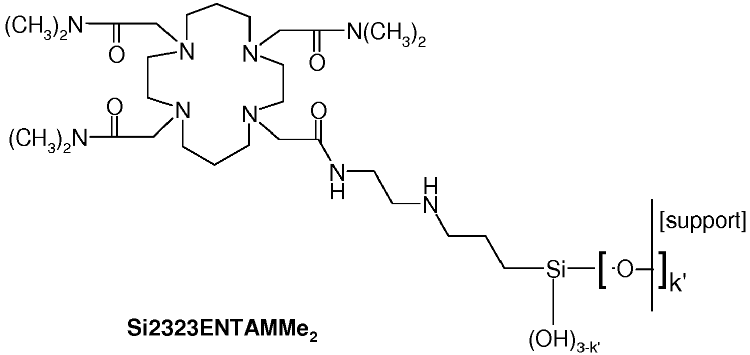 où k' est tel que défini dans la revendication 2.

4. Procédé de préparation d'un matériau de formule (II) défini selon la revendication 1, ou d'un matériau selon l'une des revendications 2 ou 3, comprenant les étapes ci-après :
(E1) on fournit un support solide à base d'un oxyde minéral comportant, en surface, des fonctions Fs capables de réagir avec des fonctions complémentaires, dites Fc, pour former une liaison chimique covalente ;
(E2) on prépare des composés polyazacycloalcanes fonctionnalisés (PAC^{f}) porteurs d'une fonction Fc du type précité, à partir de composés polyazacycloalcanes (PAC⁰) ayant un cycle comportant 4 atomes d'azote,
en fixant un groupe fonctionnel coordinant sur chacun des atomes d'azote du cycle des composés polyazacycloalcanes (PAC⁰),
où chacun desdits groupes fonctionnels coordinants fixés sur les azotes du cycle est, indépendamment des autres :
un groupe coordinant Rc répondant à la formule générale :
-(CH₂)ₙ-C(=O)-NR¹R²
où n, R¹ et R² ont les significations données dans la revendication 1 ;
ou
un groupe coordinant et réactif Rcr répondant à la formule générale suivante :
-(CH₂)ₚ-C(=O)-NR³-(P)-G¹
où :
p et R³ ont les significations données dans la revendication 1 ;
-(P)- représente une liaison chimique ou bien une chaîne hydrocarbonée, linéaire ou ramifiée, saturée ou insaturée, éventuellement cyclisée en tout ou partie et éventuellement interrompue par un ou plusieurs hétéroatomes, liée par au moins une liaison covalente au support solide (S) ; et
-G¹ est un groupe fonctionnel porteur d'une fonction Fc capable de réagir avec les fonctions Fs portées par le support solide fourni dans l'étape (E1) pour former une liaison covalente entre les polyazacycloalcanes (PAC^{f})
et
(E3) on met en contact les polyazacycloalcanes fonctionnalisés (PAC^{f}) obtenus dans l'étape (E2) avec le support solide fourni dans l'étape (E1).

5. Procédé selon la revendication 4, où, dans l'étape (E2) :
on fixe un groupe coordinant réactif Rcr sur un des atomes d'azote du cycle des composés polyazacycloalcanes (PAC⁰);
et, préalablement ou postérieurement,
on fixe des groupes coordinants Rc tels que définis dans la revendication 4 sur chacun des autres atomes d'azote du cycle des composés polyazacycloalcanes (PAC⁰).

6. Procédé selon la revendication 5, où, les composés polyazacycloalcanes (PAC^{f}) préparés dans l'étape (E2) répondent à la formule générale (IIf) suivante : 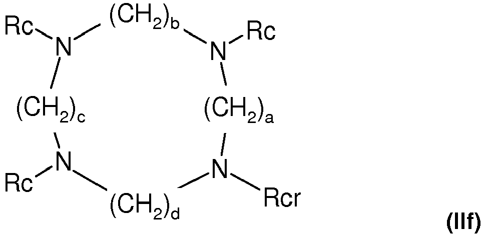 où :
a, b, c, d et Rc sont tels que définis dans la revendication 1 ; et
Rcr est un groupe coordinant et réactif répondant à la formule générale -(CH₂)ₚ-C(=O)-NR³-(P)-G¹ telle que définie dans la revendication 4.

7. Procédé selon la revendication 6, pour la préparation d'un matériau selon la revendication 2 ou 3, dans lequel :
• le support solide fourni dans l'étape (E1) est un gel de silice, qui comporte ses fonctions -OH de surface à titre de fonctions Fs ; et
• les composés (PAC^{f}) préparés dans l'étape (E2) sont des composés porteurs de fonctions trialcoxysilanes -Si(OR)₃ à titre de fonctions Fc, qui répondent à la formule générale (IIf-a1) suivante : 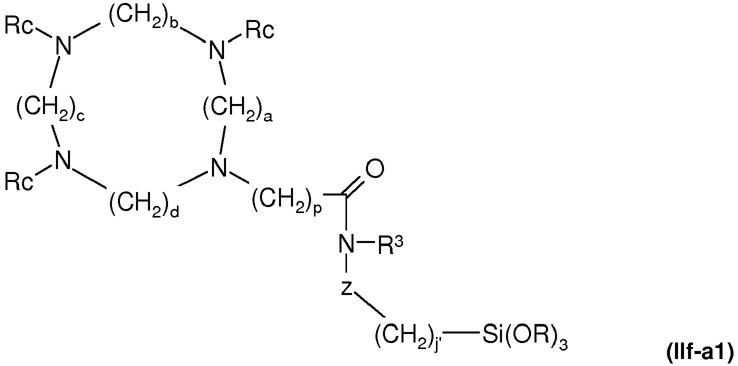 où :
a, b, c, d, p, Rc, R³, z et j' sont tels que définis dans la revendication 2 ou 3 ; et
R est un groupe alkyle comprenant de 1 à 4 atomes de carbone.

8. Procédé selon la revendication 5, pour la préparation d'un matériau selon la revendication 2 ou 3, où :
• le support solide fourni dans l'étape (E1) est un gel de silice modifié qui comporte des fonctions -X de surface à titre de fonctions Fs, où X est un halogène, ce gel de silice modifié étant obtenu par greffage d'un trialcoxysilane de formule X-(CH₂)_{j'}-Si(OR)₃, où j' est tel que défini dans la revendication 2 ou 3, et R est un groupe alkyle comprenant de 1 à 4 atomes de carbone ; et
• les composés (PAC^{f}) préparés dans l'étape (E2) sont des composés porteurs de fonctions -NH₂ à titre de fonctions Fc, qui répondent à la formule générale (IIf-a2) suivante : 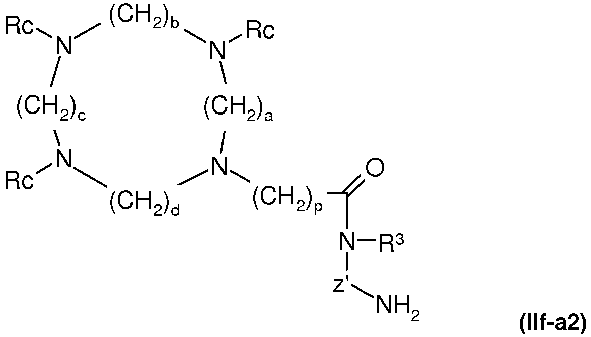 où :
a, b, c, d, p, Rc et R³ sont tels que définis dans la revendication 2 ou 3 ; et
z' est un groupe hydrocarboné divalent, linéaire ou ramifié, saturé ou insaturé, éventuellement cyclisé en tout ou partie et éventuellement interrompu par un ou plusieurs hétéroatomes.

9. Procédé selon la revendication 5, pour la préparation d'un matériau selon la revendication 2 ou 3, où :
• le support solide fourni dans l'étape (E1) est un gel de silice modifié qui comporte des fonctions -Si-H de surface, ce gel de silice modifié étant obtenu par greffage d'un trialcoxysilane de formule H-Si(OR)₃, où R est un groupe alkyle comprenant de 1 à 4 atomes de carbone ; et
• les composés (PAC^{f}) préparés dans l'étape (E2) sont des composés porteurs de fonctions -CH=CH₂ à titre de fonctions Fc, qui répondent à la formule générale (IIf-a3) suivante : 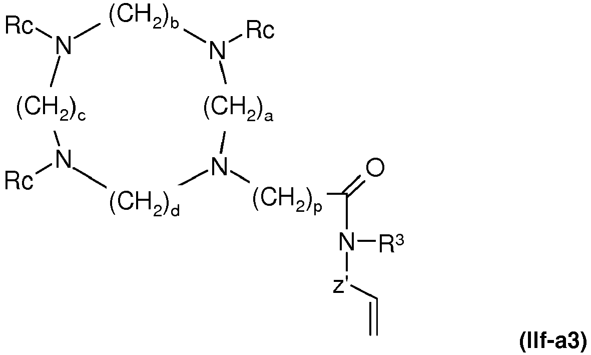 où :
a, b, c, d, p, Rc, et R³ sont tels que définis dans la revendication 2 ou 3 ; et
-z'- est un groupe hydrocarboné divalent, linéaire ou ramifié, saturé ou insaturé, éventuellement cyclisé en tout ou partie et éventuellement interrompu par un ou plusieurs hétéroatomes.

10. Utilisation d'un matériau selon l'une des revendications 1 à 3 pour piéger des cations métalliques, notamment des ions Pb²⁺, Cd²⁺ , Cu²⁺ , Zn²⁺ et/ou Ni²⁺, dissous au sein d'un milieu liquide, notamment au sein d'un milieu aqueux.

11. Procédé de purification d'un milieu liquide contaminé par des cations métalliques, dans lequel on met en contact ledit milieu avec un matériau tel que défini dans les revendications 1 à 3.

12. Procédé selon la revendication 11, où le milieu liquide soumis au traitement de purification est initialement contaminé par des cations Pb²⁺.

## Patentansprüche

1. Material zum Extrahieren von Metallkationen in wässrigem Medium, umfassend einen festen Träger (S), an den Polyazacycloalkan-Verbindungen (PAC) mit einem Ring mit 4 Stickstoffatomen kovalent gebunden sind, und wobei jedes der Stickstoffatome des Rings durch eine koordinierende Gruppe substituiert ist, wobei jede der koordinierenden Gruppen, die von den Stickstoffatomen des Rings einer PAC getragen sind, die am Träger (S) gebunden ist, unabhängig von den anderen:
- eine koordinierende Gruppe Rc ist, die die folgende allgemeine Formel aufweist:
-(CH₂)ₙ-C(=O)-NR¹R²
worin:
n = 1, 2 oder 3;
R¹ und R² gleich oder verschieden sind und jeweils ein Wasserstoffatom oder einen Alkylrest mit 1 bis 4 Kohlenstoffatomen, oder einen Alkenylrest mit 1 bis 4 Kohlenstoffatomen, oder einen Arylrest darstellen;
oder
- eine koordinierende und bindende Gruppe RcL, die die folgende allgemeine Formel aufweist:
-(CH₂)ₚ-C(=O)-NR³-(A)-,
worin:
p = 1, 2 oder 3;
R³ ein Wasserstoffatom oder einen Alkylrest mit 1 bis 4 Kohlenstoffatomen oder einen Alkenylrest mit 1 bis 4 Kohlenstoffatomen oder einen Arylrest darstellt;
-(A)- eine Kohlenwasserstoffkette darstellt, die linear oder verzweigt, gesättigt oder ungesättigt, gegebenenfalls ganz oder teilweise cyclisiert und gegebenenfalls durch ein oder mehrere Heteroatome unterbrochen ist, die über mindestens eine kovalente Bindung an den festen Träger (S) gebunden ist;
wobei das Material eine der folgenden Formeln aufweist: 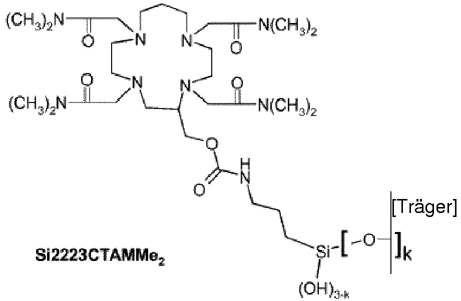 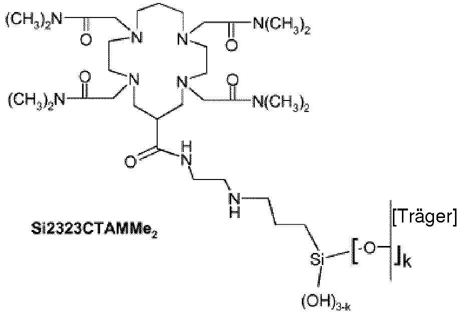 wobei k, das die Anzahl der Bindungen zwischen der cyclischen Spezies und dem festen Träger (S) darstellt, eine ganze Zahl gleich 1, 2 oder 3 ist;
oder das Material die folgende Formel (II) aufweist: 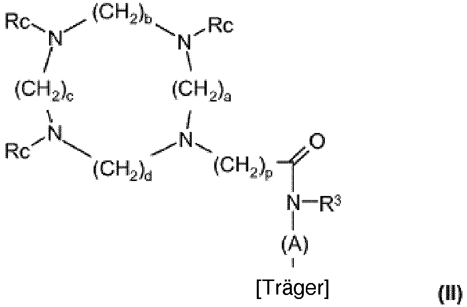 wobei:
a, b, c und d drei ganze Zahlen sind, die gleich oder verschieden sind, wobei jeweils a, b, c und d gleich 2 oder 3 sind;
jede der 3 Gruppen Rc, die gleich oder verschieden sind, eine Gruppe darstellt, die die allgemeine Formel aufweist:
-(CH₂)ₙ-C(=O)-NR¹R²
wie oben definiert; und
p, R³ und -(A)- wie oben definiert sind.

2. Material nach Anspruch 1, das die folgende Formel (IIa) aufweist: 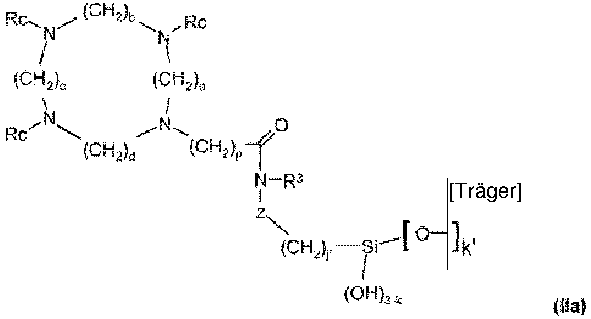 worin
a, b, c, d, p und die Gruppen Rc und R³ die in Anspruch 1 angegebenen Bedeutungen haben; z eine zweiwertige Kohlenwasserstoffgruppe, die linear oder verzweigt, gesättigt oder ungesättigt, gegebenenfalls ganz oder teilweise cyclisiert und gegebenenfalls durch ein oder mehrere Heteroatome unterbrochen ist;
j' eine ganze Zahl gleich 0, 1, 2 oder 3 ist; und
k', das die Anzahl der Bindungen zwischen der cyclischen Spezies und dem festen Träger (S) darstellt, eine ganze Zahl gleich 1, 2 oder 3 ist.

3. Material nach Anspruch 2, wobei die Polyazacycloalkan-Verbindungen (PAC), die auf dem festen Träger (S) immobilisiert sind, eine der folgenden Formeln aufweisen: 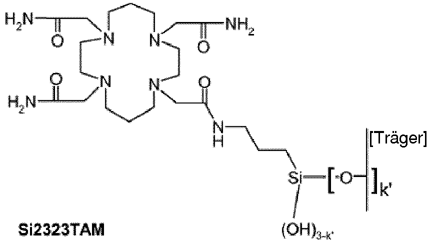 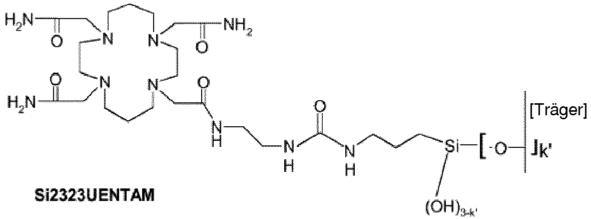 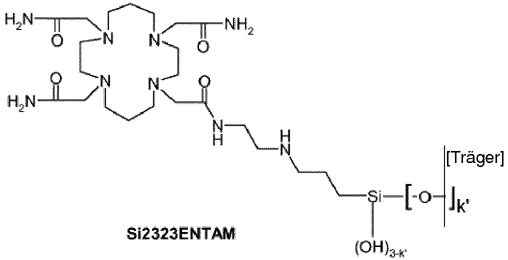 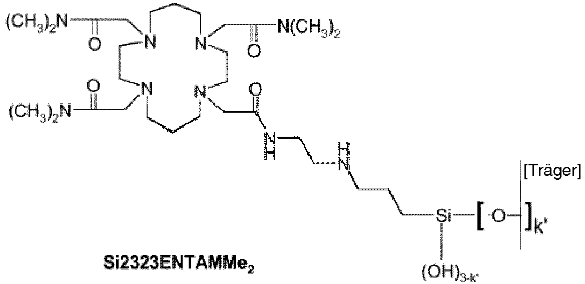 wobei k' wie in Anspruch 2 definiert ist.

4. Verfahren zum Herstellen eines Materials der Formel (II) wie in Anspruch 1 definiert, oder eines Materials nach einem der Ansprüche 2 oder 3, umfassend die folgenden Schritte:
(E1) Bereitstellen eines festen Trägers auf Basis eines Mineraloxids, das an der Oberfläche Fs-Funktionen umfasst, die fähig sind, mit komplementären Funktionen, Fc-Funktionen genannt, zu reagieren, um eine kovalente chemische Bindung zu bilden;
(E2) Herstellen von funktionalisierten Polyazacycloalkan-Verbindungen (PAC^{f}), die eine Fc-Funktion des oben genannten Typs tragen, aus Polyazacycloalkan-Verbindungen (PAC⁰) mit einem Ring mit 4 Stickstoffatomen, durch Binden einer koordinierenden funktionellen Gruppe an jedes der Stickstoffatome des Rings der Polyazacycloalkan-Verbindungen (PAC⁰),
wobei jede der koordinierenden funktionellen Gruppen, die an die Stickstoffatome des Rings gebunden sind, unabhängig von den anderen:
eine koordinierende Gruppe Rc ist, die die allgemeine Formel aufweist:
-(CH₂)ₙ-C(=O)-NR¹R²
worin n, R¹ und R² die in Anspruch 1 angegebenen Bedeutungen haben;
oder
eine koordinierende und reaktive Gruppe Rcr ist, die die folgende allgemeine Formel aufweist:
-(CH₂)ₚ-C(C=O)-NR³-(P)-G¹
worin:
p und R³ die in Anspruch 1 angegebenen Bedeutungen haben;
-(P)- eine chemische Bindung oder eine Kohlenwasserstoffkette darstellt, die linear oder verzweigt, gesättigt oder ungesättigt, gegebenenfalls ganz oder teilweise cyclisiert und gegebenenfalls durch ein oder mehrere Heteroatome unterbrochen ist, die durch mindestens eine kovalente Bindung an den festen Träger (S) verbunden ist; und
G¹ eine funktionelle Gruppe ist, die eine Fc-Funktion trägt, die fähig ist, mit den Fs-Funktionen zu reagieren, die von dem in Schritt (E1) bereitgestellten festen Träger getragen sind, um eine kovalente Bindung zwischen den Polyazacycloalkanen (PAC^{f}) zu bilden,
und
(E3) Inkontaktbringen der in Schritt (E2) erhaltenen funktionalisierten Polyazacycloalkane (PAC^{f}) mit dem in Schritt (E1) bereitgestellten festen Träger.

5. Verfahren nach Anspruch 4, wobei in Schritt (E2):
eine koordinierende reaktive Gruppe Rcr an ein der Stickstoffatome des Rings der Polyazacycloalkan-Verbindungen (PAC⁰) gebunden wird;
und, vorher oder nachher,
koordinierende Gruppen Rc wie in Anspruch 4 definiert an jedes der anderen Stickstoffatome des Rings der Polyazacycloalkan-Verbindungen (PAC⁰) gebunden werden.

6. Verfahren nach Anspruch 5, wobei die im Schritt (E2) hergestellten Polyazacycloalkan-Verbindungen (PAC^{f}) die folgende allgemeine Formel (IIf) aufweisen: 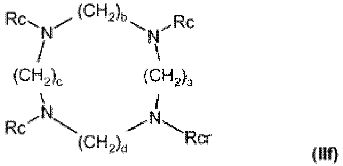 worin:
a, b, c, d und Rc wie in Anspruch 1 definiert sind; und
Rcr eine koordinierende und reaktive Gruppe die allgemeine Formel -(CH₂)ₚ-C(=O)-NR³-(P)-G¹ wie in Anspruch 4 definiert, aufweist.

7. Verfahren nach Anspruch 6 zum Herstellen eines Materials nach Anspruch 2 oder 3, wobei:
• der in Schritt (E1) bereitgestellte feste Träger ein Kieselgel ist, dessen - OH Oberflächenfunktionen als Fs-Funktionen fungiert; und
• die in Schritt (E2) hergestellten Verbindungen (PAC^{f}) Verbindungen sind, die Trialkoxysilanfunktionen -Si(OR)₃ als Fc-Funktionen tragen, die die folgende allgemeine Formel (IIf-a1) aufweisen: 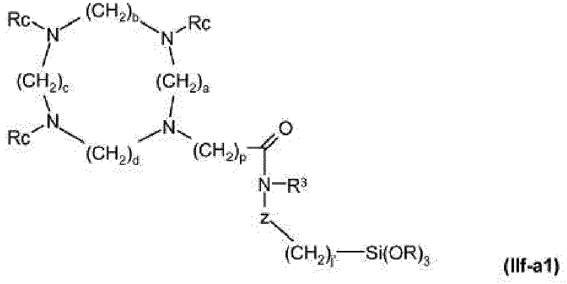 worin:
a, b, c, d, p, Rc, R³, z und j' wie in Anspruch 2 oder 3 definiert sind; und
R eine Alkylgruppe mit 1 bis 4 Kohlenstoffatomen ist.

8. Verfahren nach Anspruch 5 zum Herstellen eines Materials nach Anspruch 2 oder 3, wobei:
• der in Schritt (E1) bereitgestellte feste Träger ein modifiziertes Kieselgel ist, das -X Oberflächenfunktionen als Fs-Funktionen aufweist, wobei X ein Halogen ist, wobei das modifizierte Kieselgel durch Pfropfen eines Trialkoxysilans der Formel X-(CH₂)_{j'}-Si(OR)₃ erhalten wird, worin j' wie in Anspruch 2 oder 3 definiert ist, und R eine Alkylgruppe mit 1 bis 4 Kohlenstoffatomen ist; und
• die in Schritt (E2) hergestellten Verbindungen (PAC^{f}) Verbindungen sind, die -NH₂ Funktionen als Fc-Funktionen tragen, die die folgende allgemeine Formel (IIf-a2) aufweisen: 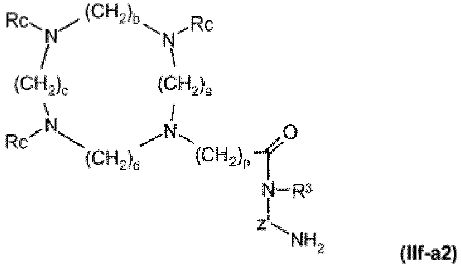 worin:
a, b, c, d, p, Rc und R³ wie in Anspruch 2 oder 3 definiert sind; und
z' eine zweiwertige Kohlenwasserstoffgruppe ist, die linear oder verzweigt, gesättigt oder ungesättigt, gegebenenfalls ganz oder teilweise cyclisiert und gegebenenfalls durch ein oder mehrere Heteroatome unterbrochen ist.

9. Verfahren nach Anspruch 5 zum Herstellen eines Materials nach Anspruch 2 oder 3, wobei:
• der in Schritt (E1) bereitgestellte feste Träger ein modifiziertes Kieselgel ist, das -Si-H-Oberflächenfunktionen aufweist, wobei dieses modifizierte Kieselgel durch Pfropfen eines Trialkoxysilans der Formel H-Si(OR)₃ erhalten wird, wobei R eine Alkylgruppe mit 1 bis 4 Kohlenstoffatomen ist; und
• die in Schritt (E2) hergestellten Verbindungen (PAC^{f}) Verbindungen sind, die -CH=CH₂ Funktionen als Fc-Funktionen tragen, die die folgende allgemeine Formel (IIf-a3) aufweisen: 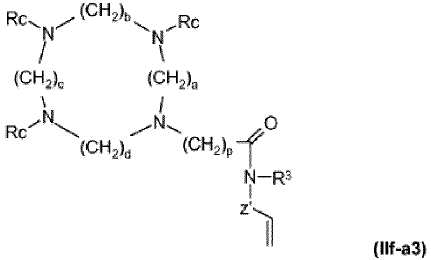 worin:
a, b, c, d, p, Rc und R³ wie in Anspruch 2 oder 3 definiert sind; und
-z'- eine zweiwertige Kohlenwasserstoffgruppe ist, die linear oder verzweigt, gesättigt oder ungesättigt, gegebenenfalls ganz oder teilweise cyclisiert und gegebenenfalls durch ein oder mehrere Heteroatome unterbrochen ist.

10. Verwendung eines Materials nach einem der Ansprüche 1 bis 3 zum Einfangen von Metallkationen, insbesondere Pb²⁺-, Cd²⁺-, Cu²⁺-, Zn²⁺- und/oder Ni²⁺-Ionen, die in einem flüssigen Medium gelöst sind, insbesondere in einem wässrigen Medium.

11. Verfahren zum Reinigen eines flüssigen Mediums, das mit Metallkationen kontaminiert ist, wobei das Medium mit einem Material, wie in den Ansprüchen 1 bis 3 definiert, in Kontakt gebracht wird.

12. Verfahren nach Anspruch 11, wobei das das Reinigungsverfahren unterzogene flüssige Medium ursprünglich mit Pb²⁺-Kationen kontaminiert ist.

## Claims

1. Material suitable for the extraction of metal cations in aqueous medium, comprising a solid support (S) on which are covalently attached polyazacycloalkane compounds (PAC) having a ring comprising 4 nitrogen atoms and in which each of the nitrogen atoms of the ring is substituted by a coordinating group, each of the coordinating groups borne by the nitrogen atoms of the ring of a (PAC) attached to the support (S) being, independently of one another:
- a coordinating group Rc corresponding to the following general formula:
-(CH₂)ₙ-C(=O)-NR¹R²
in which:
n = 1, 2 or 3;
R¹ and R² are identical or different and each represent a hydrogen atom or an alkyl radical comprising from 1 to 4 carbon atoms, or an alkenyl radical comprising from 1 to 4 carbon atoms, or an aryl radical;
or else
- a coordinating and connecting group RcL corresponding to the general formula below:
-(CH₂)ₚ-C(=O)-NR³-(A)-,
in which:
p = 1, 2 or 3;
R³ represents a hydrogen atom or an alkyl radical comprising from 1 to 4 carbon atoms, or an alkenyl radical comprising from 1 to 4 carbon atoms, or an aryl radical;
-(A)- represents a linear or branched, saturated or unsaturated hydrocarbon-based chain, optionally entirely or partially cyclized and optionally interrupted by one or more heteroatoms, connected by at least one covalent bond to the solid support (S),
said material corresponding to one of the formulae below 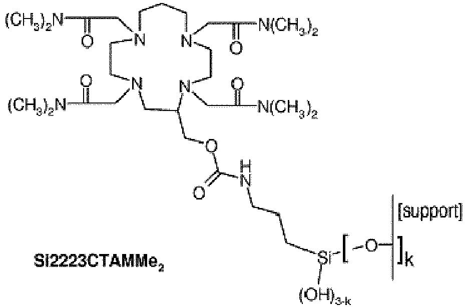 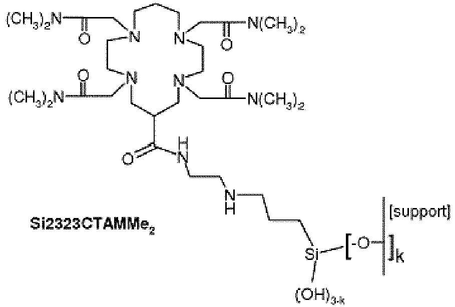 in which k, which represents the number of bonds between the cyclic entity and the solid support (S), is an integer equal to 1, 2 or 3;
or said material corresponding to the following formula (II) : 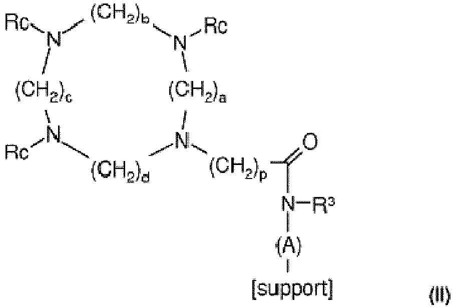 in which:
a, b, c and d are three identical or different integers, each of a, b, c and d being equal to 2 or 3;
each of the 3 groups Rc, which are identical or different, represent a group corresponding to the general formula:
-(CH₂)ₙ-C(=O)-NR¹R²
as defined above; and
p, R³ and -(A)- are as defined above.

2. Material according to Claim 1, corresponding to the following formula (IIa): 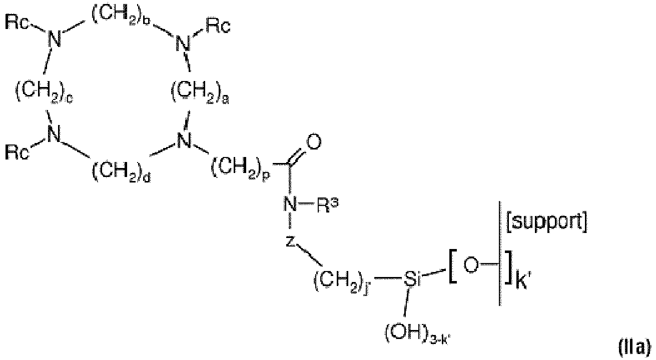 in which:
a, b, c, d, p and the groups Rc and R³ have the meanings given in Claim 1;
z is a linear or branched, saturated or unsaturated, divalent hydrocarbon-based group, optionally entirely or partially cyclized and optionally interrupted by one or more heteroatoms;
j' is an integer equal to 0, 1, 2 or 3; and
k', which represents the number of bonds between the cyclic entity and the solid support (S), is an integer equal to 1, 2 or 3.

3. Material according to Claim 2, in which the polyazacycloalkane compounds (PAC) immobilized on the solid support (S) correspond to one of the formulae below: 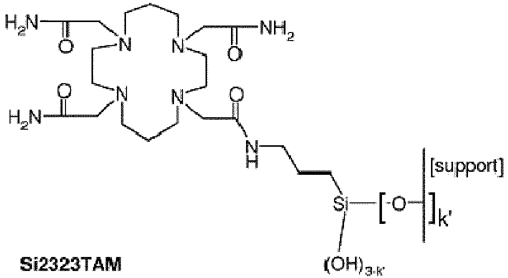 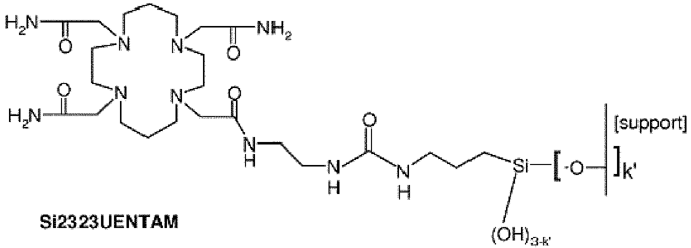 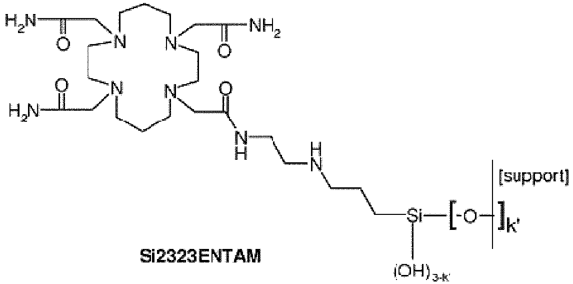 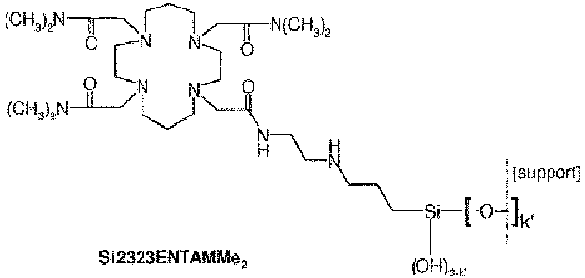 in which k' is as defined in Claim 2.

4. Process for preparing a material of formula (II) defined according to Claim 1, or a material according to either of Claims 2 and 3, comprising the following steps:
(E1) a solid support based on a mineral oxide is provided, comprising, at the surface, functions Fs capable of reacting with additional functions, referred to as Fc, to form a covalent chemical bond;
(E2) functionalized polyazacycloalkane compounds (PAC^{f}), bearing a function Fc of the abovementioned type, are prepared from polyazacycloalkane compounds (PAC⁰) having a ring comprising 4 nitrogen atoms,
by attaching a coordinating functional group to each of the nitrogen atoms of the ring of the polyazacycloalkane compounds (PAC⁰),
in which each of said coordinating functional groups attached to the nitrogen atoms of the ring is, independently of the others:
a coordinating group Rc corresponding to the general formula:
-(CH₂)ₙ-C(=O)-NR¹R²
in which n, R¹ and R² have the meanings given in Claim 1;
or
a coordinating and reactive group Rcr corresponding to the following general formula:
-(CH₂)ₚ-C(=O)-NR³-(P)-G¹
in which:
p and R³ have the meanings given in Claim 1;
-(P)- represents a chemical bond or else a linear or branched, saturated or unsaturated hydrocarbon-based chain, optionally entirely or partially cyclized and optionally interrupted by one or more heteroatoms, connected by at least one covalent bond to the solid support (S); and
-G¹ is a functional group bearing a function Fc, capable of reacting with the functions Fs borne by the solid support provided in step (E1) to form a covalent bond between the polyazacycloalkanes (PAC^{f})
and
(E3) the functionalized polyazacycloalkanes (PAC^{f}) obtained in step (E2) are brought into contact with the solid support provided in step (E1).

5. Process according to Claim 4, wherein, in step (E2):
a coordinating reactive group Rcr is attached to one of the nitrogen atoms of the ring of the polyazacycloalkane compounds (PAC⁰);
and, beforehand or subsequently,
coordinating groups Rc as defined in Claim 4 are attached to each of the other nitrogen atoms of the ring of the polyazacycloalkane compounds (PAC⁰).

6. Process according to Claim 5, wherein the polyazacycloalkane compounds (PAC^{f}) prepared in step (E2) correspond to the following general formula (IIf): 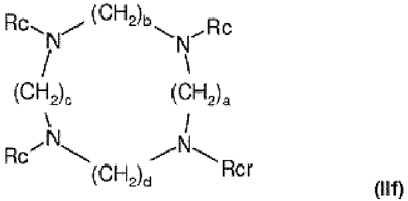 in which:
a, b, c, d and Rc are as defined in Claim 1; and
Rcr is a coordinating and reactive group corresponding to the general formula -(CH₂)ₚ-C(=O)-NR³-(P)-G¹ as defined in Claim 4.

7. Process according to Claim 6, for preparing a material according to Claim 2 or 3, wherein:
• the solid support provided in step (E1) is a silica gel which comprises its -OH surface functions as functions Fs; and
• the compounds (PAC^{f}) prepared in step (E2) are compounds bearing trialkoxysilane -Si(OR)₃ functions as functions Fc, which correspond to the following general formula (IIf-a1): 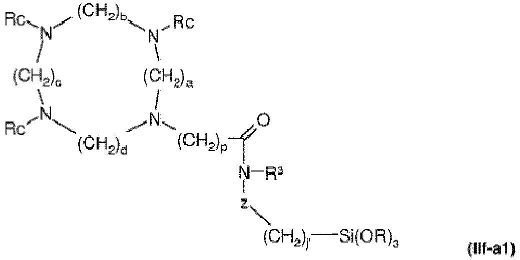 in which:
a, b, c, d, p, Rc, R³, z and j' are as defined in Claim 2 or 3; and R is an alkyl group comprising from 1 to 4 carbon atoms.

8. Process according to Claim 5, for preparing a material according to Claim 2 or 3, wherein:
• the solid support provided in step (E1) is a modified silica gel which comprises surface -X functions as functions Fs, in which X is a halogen, this modified silica gel being obtained by grafting a trialkoxysilane of formula X-(CH₂)_{j'}-Si(OR)₃, in which j' is as defined in Claim 2 or 3 and R is an alkyl group comprising from 1 to 4 carbon atoms; and
• the compounds (PAC^{f}) prepared in step (E2) are compounds bearing -NH₂ functions as functions Fc, which correspond to the following general formula (IIf-a2) : 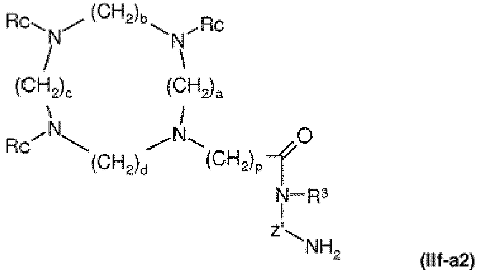 in which:
a, b, c, d, p, Rc and R³ are as defined in Claim 2 or 3; and
z' is a linear or branched, saturated or unsaturated divalent hydrocarbon-based group, optionally entirely or partially cyclized and optionally interrupted by one or more heteroatoms.

9. Process according to Claim 5 for preparing a material according to Claim 2 or 3, wherein:
• the solid support provided in step (E1) is a modified silica gel which comprises surface -Si-H functions, this modified silica gel being obtained by grafting a trialkoxysilane of formula H-Si(OR)₃, in which R is an alkyl group comprising from 1 to 4 carbon atoms; and
• the compounds (PAC^{f}) prepared in step (E2) are compounds bearing -CH=CH₂ functions as functions Fc, which correspond to the following general formula (IIf-a3): 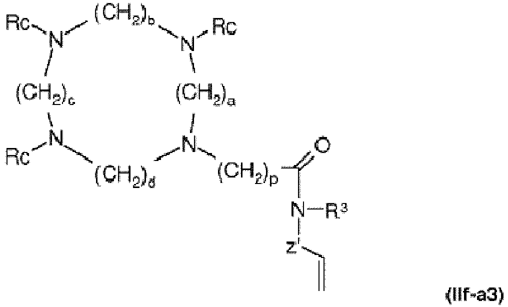 in which:
a, b, c, d, p, Rc and R³ are as defined in Claim 2 or 3; and
-z'- is a linear or branched, saturated or unsaturated divalent hydrocarbon-based group, optionally entirely or partially cyclized and optionally interrupted by one or more heteroatoms.

10. Use of a material according to one of Claims 1 to 3 for trapping metal cations, especially Pb²⁺, Cd²⁺, Cu²⁺, Zn²⁺ and/or Ni²⁺ ions, dissolved within a liquid medium, especially within an aqueous medium.

11. Process for purifying a liquid medium contaminated by metal cations, wherein said medium is brought into contact with a material as defined in Claims 1 to 3.

12. Process according to Claim 11, wherein the liquid medium subjected to the purification treatment is initially contaminated with Pb²⁺ cations.
